(19) Europäisches Patentamt
European Patent Office
Office européen des brevets

(11) EP 2 725 394 A1

(12) **EUROPEAN PATENT APPLICATION**
published in accordance with Art. 153(4) EPC

(43) Date of publication:
**30.04.2014 Bulletin 2014/18**

(21) Application number: **12801937.9**

(22) Date of filing: **22.06.2012**

(51) Int Cl.:
***G02B 5/26*** *(2006.01)* ***G02B 5/28*** *(2006.01)*

(86) International application number:
**PCT/JP2012/066036**

(87) International publication number:
**WO 2012/176891 (27.12.2012 Gazette 2012/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.06.2011 JP 2011139199**
**24.08.2011 JP 2011182332**

(71) Applicant: **Konica Minolta, Inc.**
**Tokyo 100-7015 (JP)**

(72) Inventors:
- **NAKAJIMA, Akihisa**
  **Chiyoda-ku**
  **Tokyo 100-7015 (JP)**
- **TAIMA, Yasuo**
  **Chiyoda-ku**
  **Tokyo 100-7015 (JP)**

(74) Representative: **Gille Hrabal**
**Brucknerstrasse 20**
**40593 Düsseldorf (DE)**

# (54) OPTICAL REFLECTION FILM AND METHOD FOR PRODUCING SAME

(57) Provided are an optical reflection film that uses an aqueous coating liquid for generating a refractive index, has a low production cost, is able to have a large area, and has a high coating film thermal stability, a method of manufacturing the optical reflection film, and an optical reflection body provided with the optical reflection film.

An optical reflection film containing, on a substrate, at least one unit in which a high refractive index layer and a low refractive index layer are laminated,
the optical reflection film containing, in the high refractive index layer, metal oxide particles, and
at least one of a polysaccharide alkyl ether compound, a saccharide (A) in which a main sugar chain by a 1,4 bond has 100 or less average chains, a branch structure by a 1, 6 bond is present, and the branched sugar chain has 1 to 20 average chains, and a compound (A) having a saccharide structure in which a main sugar chain by a 1,4 bond has 100 or less average chains, a branch structure by a 1, 6 bond is present, and the branched sugar chain has 1 to 20 average chains.

EP 2 725 394 A1

## Description

### TECHNICAL FIELD

The present invention relates to an optical reflection film that may have a large area with low cost, is excellent in an optical characteristic and a membrane property, and may be suitably used as a metallic gloss tone film, a visible light transmission colored film, aheatbarrier film, or an infrared shielding film, and a method of manufacturing the optical reflection film. In addition, the invention relates to an optical reflection body using the optical reflection film.

### BACKGROUND ART

Recently, an interest in energy conservation measures is growing, and a near infrared reflection film that interrupts transmission of a heat ray of sunlight through a window of a building or a vehicle is being actively developed to reduce a load applied on a cooling system.

There has been a suggestion that a laminated film in which a high refractive index layer and a low refractive index layer are alternately laminated be manufactured as an optical reflection film using a dry film forming method such as a sputtering and an evaporation method. In addition, it is also known that a design may be performed such that visible light is reflected instead of near infrared light by adjusting an optical film thickness of a laminated film that is alternately laminated.

However, the dry film forming method has issues that a production cost is high, it is difficult to achieve a large area, the method is limited to a heat-resistant material, and the like. Instead of the dry film forming method having the issues, a method of forming a heat ray shielding film using a wet coating method is known.

For example, a method of forming a transparent laminate by coating a coating liquid for a high refractive index layer, in which an ultraviolet curing acrylic resin or a thermosetting silicone resin containing a metal oxide or metallic compound fine particles is dispersed in an organic solvent, to a substrate by a wet coating method using a bar coater (for example, see Japanese Unexamined Publication No. 8-110401), and a method of forming a transparent laminate by applying a composition for forming a high refractive index coating film including rutile type titanium dioxide, a heterocyclic nitrogen compound (for example, pyridine), an ultraviolet curable binder, and an organic solvent to a substrate by a wet coating method using a bar coater (for example, see Japanese Unexamined Publication No. 2004-123766) are disclosed.

On the other hand, with regard to a manufacture of a near infrared reflection film, a method of spin coating an aqueous coating liquid using a water soluble polymer (for example, see Japanese Unexamined Publication No. 2009-86659), a method using a UV curing resin (see Japanese Unexamined Publication No. 2004-125822), and a method of performing an alternate lamination using $TiO_2$ sol/$SiO_2$ sol (see Japanese Unexamined Publication No. 2003-266577) are disclosed.

### SUMMARY OF INVENTION

However, in the methods disclosed in Japanese Unexamined Publication No. 8-110401 and Japanese Unexamined Publication No. 2004-123766, an organic solvent is frequently used as a solvent of a coating liquid for forming a high refractive index layer, and a great amount of organic solvent is scattered when the high refractive index layer is formed and dried and thus, an environmental issue is involved.

On the other hand, an example of Japanese Unexamined Publication No. 2009-86659 describes that a low refractive index layer is spin coated using an aqueous solution. However, without including an inorganic oxide particle, a solution of an organic solvent (Propylene Glycol Monomethyl Ether Acetate; PGMEA) of $TiO_2$ + dispersant + UV curing resin is spin coated in the high refractive index layer. Thus, a complete aqueous coating is not achieved.

Furthermore, in the method disclosed in Japanese Unexamined Publication No. 2004-125822, a high refractive index layer is formed using an ultraviolet curable binder or a heat-curing type binder as a binder, and then a curing is performed by an ultraviolet ray or heat. As such, a film is excessively hard and thus, flexibilityispoor. Inaddition, in the method using sol, a film is fragile since the film is settled only by a mutual aggregation of particles, and a coating property lacking in flexibility is obtained.

For this reason, in a case of being used in a severe condition such as a car in summer, there is a problem of a crack generated on a film surface when exposed to a heat cycle (a repetition of a temperature environment of daytime and a temperature environment of night), and dew condensation and drying in winter are repeated.

Further, when an organic binder and a metal oxide are used as a material for a high refraction layer and a low refraction layer as in a method disclosed in Japanese Unexamined Publication No. 2003-266577, a refractive index is different between layers and thus, infrared light may be shielded with a thinner layer. However, since a linear expansion coefficient is different between an organic binder (acryl, PVA, and gelatin) and a metal oxide, there is a problem that a

coating film cracks from between an organic binder and metal oxide fine particles.

In view of the above problem, a purpose of the invention is to provide an optical reflection film which uses an aqueous coating liquid for generating a refractive index, has a low production cost, may have a large area, and has a high coating film thermal stability, a method of manufacturing the optical reflection film, and an optical reflection body provided with the optical reflection film. Further, the invention also provides an infrared shielding film which is a type of use of the optical reflection film rarely cracking in spite of a temperature change, and a method of manufacturing the infrared shielding film.

The purpose of the invention is achieved by a configuration below.

(1)

An optical reflection film containing, on a substrate, at least one unit in which a high refractive index layer and a low refractive index layer are laminated,
the optical reflection film including, in the high refractive index layer, metal oxide particles, and
at least one of a polysaccharide alkyl ether compound, a saccharide (A) in which a main sugar chain by a 1,4 bond has 100 or less average chains, a branch structure by a 1, 6 bond is present, and the branched sugar chain has 1 to 20 average chains, and a compound (A) having a saccharide structure in which a main sugar chain by a 1,4 bond has 100 or less average chains, a branch structure by a 1, 6 bond is present, and a branched sugar chain has 1 to 20 average chains.

(2)

The optical reflection film according to (1),
in which the high refractive index layer contains at least one of the saccharide (A) and the compound (A).

(3)

The optical reflection film according to (1) or (2),
in which the saccharide (A) and the saccharide structure are cyclic.

(4)

The optical reflection film according to any one of (1) to (3),
in which the high refractive index layer contains the polysaccharide alkyl ether compound.

(5)

The optical reflection film according to (1) or (4),
in which the polysaccharide alkyl ether compound is a cellulose alkyl ether compound.

(6)

The optical reflection film according to any one of (1) to (5),
in which the metal oxide particles are rutile type titanium dioxide particles.

(7)

A method of manufacturing the optical reflection film according to any one of (1) to (6),
in which the high refractive index layer and the low refractive index layer are formed by an aqueous simultaneous multilayer coating.

(8)

The method of manufacturing the optical reflection film according to (7),
in which a viscosity of a coating liquid forming each layer is 50 to 500 mPa·s at 40°C.

(9)

An optical reflection body in which at least one surface of a substrate is provided with the optical reflection film according to any one of (1) to (6).

(10)

An infrared shielding film containing, on a substrate, at least one unit in which a high refractive index layer and a low refractive index layer are laminated,
the infrared shielding film containing, in at least one of the high refractive index layer and the low refractive index layer, at least one of a saccharide (A) in which a main sugar chain by a 1,4 bond hat 100 or less average chains, a branch structure by a 1, 6 bond is present, and the branched sugar chain has 1 to 20 average chains, and a compound (A) having a saccharide structure in which a main sugar chain by a 1, 4 bond has 100 or less average chains, a branch structure by a 1,6 bond is present, and the branched sugar chain has 1 to 20 average chains.

(11)

The infrared shielding film according to (10),
in which a metal oxide is contained in the high refractive index layer or the low refractive index layer.

(12)

The infrared shielding film according to (10) or (11),
in which the saccharide (A) and the saccharide structure are cyclic.

(13)

The infrared shielding film according to (11),
in which particles of the metal oxide are manufactured in the presence of at least one of the saccharide (A) and the compound (A).

(14)

An infrared shielding body provided with the infrared shielding film according to any one of (10) to (13).

**DESCRIPTION OF EMBODIMENTS**

Hereinafter, an embodiment for implementing the invention is described in detail.
This application is based on Japanese Patent Application No. 2011-139199, filed on June 23, 2011, and Japanese Patent Application No. 2011-182332, filed on August 24, 2011, the entire disclosure of which is incorporated herein by reference.
An embodiment of the invention is an optical reflection film containing, on a substrate, at least one unit including a high refractive index layer and a low refractive index layer, in which the high refractive index layer contains metal oxide particles, and at least one of a polysaccharide alkyl ether compound, a saccharide (A) in which a main sugar chain by a 1,4 bond has 100 or less average chains, a branch structure by a 1,6 bond is present, and the branched sugar chain has 1 to 20 average chains, and a compound (A) having a saccharide structure in which a main sugar chain by a 1, 4 bond has 100 or less average chains, a branch structure by a 1,6 bond is present, and the branched sugar chain has 1 to 20 average chains.
Hereinafter, the saccharide (A) in which a main sugar chain by a 1,4 bond has 100 or less average chains, a branch structure by a 1, 6 bond is present, and a branched sugar chain has 1 to 20 average chains may be referred to as a saccharide (A) The compound (A) having a saccharide structure in which a main sugar chain by a 1, 4 bond has 100 or less average chains, a branch structure by a 1,6 bond is present, and the branched sugar chain has 1 to 20 average chains may be referred to as a compound (A).
It was found that the optical reflection film may be manufactured using an aqueous coating liquid for generating a refractive index, has a low production cost, and may have a large area and thus, an optical reflection film having a high thermal stability may be achieved.
Referring to the "optical reflection film" in this specification, it is essential to reflect light having an arbitrary wavelength, and a light absorbing function may not be needed. Referring to a "near infrared reflection film", it is essential to reflect at least near infrared light, and a near infrared absorbing function may not be needed. In this specification, the "near infrared reflection film", may be referred to as an "infrared shielding film".
As shown in Example described below, an purpose of the invention is achieved by a high refractive index layer containing metal oxide particles, and at least one of a polysaccharide alkyl ether compound having an appropriate hydrophilicity, a saccharide (A), and a compound (A).

That is, in a method of manufacturing an optical reflection film of the related art, a coating liquid for a high refractive index layer using an organic solvent as a medium is mainly used to form a high refractive index layer in which metal oxide fine particles are dispersed in a resin binder. However, there is a problem with a coating uniformity or an environmental adequacy.

In the related art, for example, in a high refractive index layer coating containing a resin polymer and metal oxide particles (for example, titanium dioxide particles), examples of a reason that an aqueous coating liquid is not applied to include that it is difficult to stably disperse titanium dioxide particles in a water soluble polymer solution. As a method of manufacturing an aqueous coating liquid in which metal oxide particles are dispersed, it is attempted to stabilize metal oxide particles by a hydrogen bond with a resin material using a resin material having a high hydrophilicity. A method of increasing an amount of hydrophilic group in a resin material, and introducing a group having a high hydrophilicity such as a sulfonate group and a carboxyl group is generally used. However, the method may not stably disperse metal oxide particles having a high surface activity such as titanium dioxide nanoparticle.

As a result of proceeding with a keen examination on the problem, the inventor could stably disperse and include, as an aqueous coating liquid for forming a high refractive index layer, metal oxide particles (for example, rutile type titanium dioxide and the like), and at least one of a polysaccharide alkyl ether compound, a saccharide (A), and a compound (A) in an aqueous medium. Further, it is possible to obtain an optical reflection film that may ensure a thickening property as a coating liquid, has a high refractive index difference since amass transfer is small between layers in a simultaneous multilayer coating, may obtain a uniform coating film, and is excellent in an environmental adequacy.

Hereinafter, components of an optical reflection film of the invention, and an embodiment for implementing the invention and the like will be described in detail.

<<Optical reflection film and infrared shielding film which is a use thereof>>

An optical reflection film of the invention is characterized in having a configuration in which at least a unit including a high refractive index layer and a low refractive index layer is laminated on a substrate, and corresponding to an optical reflection film that reflects light having a specific wavelength.

The optical reflection film has a reflectance that is a predetermined value or more in an arbitrary wavelength region, and it is preferable that a reflectance in an arbitrary wavelength region is 50% or more.

In addition, it is preferable that the optical reflection film is configured as a near infrared reflection film that mainly reflects near infrared light.

A reflectance in a specific wavelength region is determined by the number of laminated layers and a refractive index difference between two layers adjacent to each other, and the same reflectance is obtained with a smaller number of layers when a refractive index difference is great. The refractive index difference and the number of layers to be used may be calculated using commercially available optical design software. For example, when an infrared reflectivity of 90% or more is to be obtained, and a refractive index difference is less than 0.1, 200 or more layers are needed to be laminated. Thus, in addition to productivity being lowered, scattering at an interface between laminated layers increases, transparency is degraded, and manufacturing without a breakdown is extremely difficult. In terms of enhancing a reflectance and reducing the number of layers, a refractive index difference is substantially limited to about 1.40 even though an upper limit is absent.

In addition, the optical reflection film according to the invention may be set to an infrared shielding film by changing a specific wavelength region which enhances a reflectance, and an infrared shielding film in which a specific wavelength region is set to a near infrared region as an example of a use of the optical reflection film is also described.

Hereinafter, description is made in detail by taking an infrared shielding film which is a use of the optical reflection film of the invention for example.

The near infrared shielding film of the invention includes a multi-layer film laminated with layers (a high refractive index layer and a low refractive index layer) having different refractive indexes on a substrate (for example, a polymer film), has a transmittance in a visible light region indicated by JIS R3106-1998 of 50% or more, and includes a region having a reflectance exceeding 50% in a region where a wavelength is 900 nm to 1,400 nm.

In general, referring to the infrared shielding film, it is preferable that a refractive index difference between a high refractive index layer and a low refractive index layer is set to a great value since a reflectance of infrared light may be increased using a smaller number of layers. In the invention, it is preferable that a refractive index difference between a high refractive index layer and a low refractive index layer adjacent to each other is at least 0.1 or more, preferably 0.3 or more, and more preferably 0.4 or more in at least one unit including the high refractive index layer and the low refractive index layer.

In addition, an infrared shielding film according to the invention is an optical reflection film containing, on a substrate, at least one unit in which a high refractive index layer and a low refractive index layer are laminated, in which at least one of the high refractive index layer and the low refractive index layer includes at least one of a saccharide (A) in which a main sugar chain by a 1,4 bond has 100 or less average chains, a branch structure by a 1, 6 bond is present,

and the branched sugar chain has 1 to 20 average chains, and a compound (A) having a saccharide structure in which a main sugar chain by a 1, 4 bond has 100 or less average chains, a branch structure by a 1, 6 bond is present, and the branched sugar chain has 1 to 20 average chains.

In this way, it is possible to provide an infrared shielding film in which a crack is rarely generated in a coating film even when exposed to a heat cycle (a repetition of a temperature of daytime and a temperature of night), and dew condensation and drying in winter are repeated.

Subsequently, a fundamental component of the high refractive index layer and the low refractive index layer in the optical reflection film of the invention is described.

The optical reflection film of the invention may employ a configuration in which at least one unit including the high refractive index layer and the low refractive index layer is laminated on a substrate. However, in terms of the above description, it is preferable that the number of layers of the high refractive index layer and the low refractive index layer is, as a range of a total number of layers, 50 units or less, more preferably 40 layers (20 units) or less, and even more preferably 20 layers (10 units) or less.

In addition, referring to the optical reflection film of the invention, when a refractive index difference between the high refractive index layer and the low refractive index layer adjacent to each other is 0.1 or more, and a plurality of high refractive index layers and a plurality of low refractive index layers are respectively included as described above, it is preferable that all refractive index layers satisfy a requirement defined in the invention. However, an outermost layer and an undermost layer may have a configuration not satisfying the requirement defined in the invention.

In addition, referring to the optical reflection film of the invention, a refractive index of the high refractive index layer is preferably 1.8 to 2.5, more preferably 1.9 to 2.2. In addition, a refractive index of the low refractive index layer is preferably 1.1 to 1.6, more preferably 1.3 to 1.5.

In addition, referring to the optical reflection film of the invention, it is preferable that a rutile type titanium dioxide having a volume average particle diameter of 100 nm or less is added as a metal oxide to the high refractive index layer. It is more preferable that a metal oxide is added to both the high refractive index layer and the low refractive index layer. In the invention, a metal oxide content in the high refractive index layer is preferably 30 mass% or more and 90 mass% or less, more preferably 50 mass% or more and 80 mass% or less of a total mass% or the high refractive index layer.

In addition, an additive described below may be added as necessary to the high refractive index layer and/or the low refractive index layer in the optical reflection film according to the invention.

In this way, it is possible to provide an optical reflection film which uses an aqueous coating liquid for generating a refractive index, has a low production cost, may have a large area, and has a high thermal stability, a method of manufacturing the optical reflection film, and an optical reflection body provided with the optical reflection film.

Referring to the optical reflection film of the invention, an alkyl ether compound content in the high refractive index layer is preferably 10 mass% or more and 50 mass% or less, more preferably 15 mass% or more and 30 mass% or less of a total mass of the high refractive index layer.

In the invention, refractive indexes of the high refractive index layer and the low refractive index layer may be obtained according to a method below.

A sample in which each refractive index layer to be subjected to a refractive index measurement is provided as a single layer on a substrate is manufactured, the sample is cut to 10 cm x 10 cm, and then a refractive index is obtained according to the method below. A surface opposite to a surface to be measured (rear surface) of each sample is roughening-treated by using a U-4000 type (manufactured by Hitachi, Ltd.) as a spectrophotometer, and then a reflection of light on the rear surface is prevented by performing a light absorption treatment using a black spray to measure reflectance at 25 points the visible light region (400 nm to 700 nm) under a condition of a 5 degree specular reflection, and an average is obtained. Further, an average refractive index is obtained from a measurement result thereof.

Hereinafter, each of a component of the optical reflection film according to the invention, and a component of the infrared shielding film which is a use of the optical reflection film is described.

[High refractive index layer]

<High refractive index layer in optical reflection film>

In the optical reflection film according to the invention, the high refractive index layer of the optical reflection film contains metal oxide particles, and at least one of a polysaccharide alkyl ether compound, a saccharide (A) in which a main sugar chain by a 1, 4 bond has 100 or less average chains, a branch structure by a 1, 6 bond is present, and the branched sugar chain has 1 to 20 average chains, and a compound (A) having a saccharide structure in which a main sugar chain by a 1, bond has 100 or less average chains, a branch structure by a 1, 6 bond is present, and the branched sugar chain has 1 to 20 average chains.

In addition, it is preferable that the high refractive index layer of the optical reflection film contains the metal oxide particles, and at least one of the saccharide (A) and the compound (A).

<metal oxide particles>

It is preferable that metal oxide particles having a refractive index of 2. 0 or more and a volume average particle diameter of 100 nm or less is used as the metal oxide particles used in the high refractive index layer according to the invention. Examples include zirconium oxide, cerium oxide, titanium dioxide, and the like. In particular, it is preferable that rutile type titanium dioxide particles are used.

<Rutile type titanium dioxide>

In general, titanium dioxide particles are frequently used in a surface-treated state to inhibit a photocatalytic activity of a particle surface, and enhance a dispersibility to a solvent and the like. For example, titanium dioxide particles that include a surface covered with an enveloping layer including silica, and include a surface having a negative electric charge, and titanium dioxide particles that include an enveloping layer formed of an aluminum oxide, have a pH of 8 to 10, and include a surface having a positive electric charge are known.

In the invention, it is preferable that the metal oxide particles correspond to rutile type (tetragonal system) titanium dioxide particles having a volume average particle diameter of 100 nm or less.

The term "volume average particle diameter" here refers to a volume average particle diameter of a primary particle or a secondary particle dispersed in a medium, and may be measured by a laser diffraction/scattering, a dynamic light scattering, and the like.

It is preferable that a volume average particle diameter of rutile type titanium dioxide particles is 100 nm or less, more preferably 4 nm or more and 50 nm or less, and even more preferably 4 nm or more and 30 nm or less. It is preferable that a volume average particle diameter is 100 nm or less in terms of reducing a haze and being excellent in visible light transmitting property. Titanium dioxide particles having a volume average particle diameter exceeding 100 nm are inappropriate for the high refractive index layer not only in the invention.

A volume average particle diameter of the rutile type titanium dioxide particles according to the invention refers to a weighted average particle diameter using a volume expressed by a volume average particle diameter $mv = \{\sum(vi \cdot di)\}/\{\sum(vi)\}$ when a particle or a particle present on a cross-sectional surface or a surface of a refractive index layer is observed by an electron microscope, particle diameters of 1,000 arbitrary particles are measured, and a surface area for a particle is set to ai, and a volume is set to vi in a group of metal oxide particles including n1, n2, ..., ni, ..., nk particles having a particle diameter of d1, d2, ..., di, ..., dk, respectively.

Further, it is preferable that titanium dioxide particles according to the invention correspond to a monodisperse. The term "monodisperse" indicates that a monodispersity obtained by an equation below is 40% or less. The particles have a monodispersity of preferably 30% or less, more preferably 0.1 to 20%.

[Equation 1]

$$\text{Monodispersity} = (\text{Standard deviation of particle diameter})/(\text{Average of particle diameter}) \times 100$$

(Method of manufacturing rutile type titanium dioxide)

In the invention, it is preferable to use an aqueous titanium dioxide sol in which a pH is 1.0 or more and 3.0 or less, and a zeta potential of titanium particles is positive when an aqueous coating liquid for a high refractive index layer is prepared as a method of manufacturing an optical reflection film.

In general, titanium dioxide particles are frequently used in a surface-treated state to inhibit a photocatalytic activity of a particle surface, and enhance a dispersibility to a solvent and the like. For example, titanium dioxide particles that include a surface covered with an enveloping layer including silica, and include a surface having a negative electric charge, and titanium dioxide particles that include an enveloping layer formed of an aluminum oxide, have a pH of 8 to 10, and include a surface having a positive electric charge are known. However, in the invention, it is preferable to use an aqueous sol of titanium dioxide which does not undergo a surface treatment, has a pH of 1.0 to 3.0, and has a positive zeta potential.

Referring to a method of preparing a rutile type titanium dioxide sol that may be used in the invention, it is possible to refer to the description of Japanese Unexamined Publication No. 63-17221, Japanese Unexamined Publication No. 7-819, Japanese Unexamined Publication No. 9-165218, Japanese Unexamined Publication No. 11-43327, Japanese Unexamined Publication No. 63-17221, Japanese Unexamined Publication No. 7-819, Japanese Unexamined

Publication No. 9-165218, and Japanese Unexamined Publication No. 11-43327 and the like.

In addition, referring to another method of manufacturing rutile type titanium dioxide according to the invention, it is possible to refer to, for example, "Titanium dioxide - physical property and applied technology" Manabu Seino, p.255 to 258 (year 2000), Gihodo Shuppan Co., Ltd., or a method of process (2) described in paragraphs 0011 to 0023 of a specification of WO 2007/039953.

A manufacturing method according to process (2) includes process (2) that treats an obtained titanium dioxide dispersed material with a compound containing a carboxylic acid group and an inorganic acid after process (1) that treats a titanium dioxide hydrate with at least one basic compound selected from the group consisting of a hydroxyl article of alkali metal and a hydroxide of an alkali earth metal. In the invention, it is possible to use an aqueous sol of a rutile type titanium dioxide having a pH adjusted to 1.0 to 3.0 with an inorganic acid obtained in process (2).

<Polysaccharide alkyl ether compound>

"A polysaccharide alkyl ether compound" according to the invention refers to a compound obtained by replacing a part of hydrogen atoms of hydroxyl groups included in a polysaccharide with an alkyl group.

It is preferable that a substitution rate of the polysaccharide alkyl ether compound according to the invention is 10 to 50%. The term "substitution rate" here refers to the number of substituted alkyl groups with respect to the total number of hydroxyl groups originally included in a polysaccharide.

Referring to the substitution rate of an alkyl ether group, in a case of being indicated by a ratio of being replaced with an alkyl ether group with respect to the total amount of hydroxyl groups included in a polysaccharide, gelation or insolubilization of a polysaccharide occurs since a hydrogen bond between molecules is excessively strong when the substitution rate is less than 10%, and aggregation of inorganic particles occurs due to an increased hydrophobicity when the substitution rate exceeds 50%. Thus, it is preferable that the substitution rate is 10% to 50% in the invention. For dispersion stabilization of inorganic particles, 20% to 40% is more preferable.

For example, polysaccharide alkyl ether may be prepared using various polysaccharides described below by a method described in document RD 95378007 (October of 1995). In addition, a substituent having a sulfonate group and a carboxy group with an extremely strong hydrophilicity tend to inhibit a dispersion stabilization of metal oxide particles and thus, are undesirable

(Polysaccharide)

Polysaccharide is not particularly limited, and examples include generally known natural simple polysaccharides, natural compound polysaccharides, synthetic simple polysaccharides, and synthetic compound polysaccharides. Referring to details of the polysaccharides, it is possible to refer to "Biochemistry encyclopedia (second edition), Tokyo chemistry coterie Publication", "Food industry" 31st volume (1988) page 21, and the like.

Examples of the polysaccharide that may be applied to the invention include celluloses, galactans (for example, agarose, agaropectin, and the like), galactomannan (for example, locust bean gum, guar gum, and the like), xyloglucan (for example, tamarind gum and the like), glucomannan (for example, konjac mannan, glucomannan originated from wood, xanthan gum, and the like), alginic acid and alginate, agar, κ-carrageenan, λ-carrageenan, ι-carrageenan, furcellaran and the like deriving from natural polymer polysaccharides originated from red algae, and the like. It is preferable that a constitutional unit excludes a carboxylic acid group and a sulfonate group in terms of preventing a dispersion stability of metal oxide fine particles coexisting in a coating liquid from being degraded. It is preferable that the polysaccharide corresponds to a polysaccharide only including pentose such as cellulose, L-arabinose, D-ribose, 2-deoxyribose, and D-xylose, and hexose such as D-glucose, D-frutose, D-mannose, and D-galactose. In the invention, it is preferable to use water soluble cellulose ether such as methyl cellulose obtained by replacing cellulose with a methoxy group and hydroxypropyl methylcellulose obtained by replacing cellulose with a methoxy group and a hydroxypropoxyl group, and ethylated guar gum obtained by replacing guar gum with an ethoxy group.

A method of manufacturing polysaccharide alkyl ether is not particularly limited. However, it is possible to use a method, which is a well-known method of the related art, of reacting a polysaccharide with an etherification agent such as methyl chloride, ethylene oxide, and propylene oxide using an alkali such as caustic soda and caustic potassium as a catalyst. Alkyl ether of the invention has a structure in which a hydrogen atom of a polysaccharide hydroxyl group is replaced with an alkyl group, and it is preferable that the alkyl group corresponds to C1 to C6 alkyl. In particular, a methoxyl group, an ethoxyl group, and a propoxyl group are preferable. Further, in addition to the alkyl group, it is preferable that a portion is replaced with a hydroxymethoxyl group, a hydroxyethoxyl group, a hydroxypropoxyl group, and the like partially having a hydroxyl group.

A substitution rate of an alkyl ether group refers to a ratio of being replaced with an alkyl ether group with respect to a total amount of hydroxyl groups included in a polysaccharide. Gelation or insolubilization of a polysaccharide

occurs since a hydrogen bond between molecules is excessively strong when the substitution rate is less than 10%, and aggregation of inorganic particles occurs due to an increased hydrophobicity when the substitution rate exceeds 50%. Thus, it is preferable that the substitution rate is 10% to 50% in the invention for a dispersion stabilization of inorganic particles, and 20% to 40% is more preferable. Further, a polysaccharide alkyl ether compound has a solubility of 1.0 g or more in 100 g of water at 40°C.

It is preferable that a polysaccharide alkyl ether according to the invention is an alkyl ether compound of cellulose.

Further, a number average molecular weight of a polysaccharide alkyl ether of the invention is preferably 1,000 to 100,000, more preferably 5,000 to 50,000.

<Saccharide (A) having main sugar chain by a 1,4 bond and a branch structure by a 1,6 bond, and compound (A) having the saccharide structure>

A saccharide having a main sugar chain by a 1,4 bond and a branch structure of a 1, 6 bond of the invention indicates a saccharide in which a main chain is formed by dehydration of OH's at 1,4 positions of a carbohydrate and a sugar chain is bound to OH at 6 position of the carbohydrate. A saccharide of the invention also indicates xyloglucans such as tamarind seed gum, in which another xylose is condensed to the OH group at 6 position with respect to the glucose of the main chain, galactomannans such as guar gum, tara gum, locust bean gum, in which galactose is condensed to the OH group at 6 position with respect to the mannose of the main chain, and a treatment resultant of a carbohydrate such as starch in which amylose chains are branched with an enzyme selectively digesting the main chain. For example, in a case where the main chain is a $\beta$-1,4-glucan such as xyloglucan or starch, the saccharide indicates a saccharide digested by an enzyme which selectively hydrolyzes glycosidic bonds, such as 1,4-$\alpha$-D-glucan glucohydrolase, exo-1,4-$\alpha$-glucosidase, $\gamma$-amylase, lysosomal $\alpha$-glucosidase, amyloglucosidase, or the like, and in a case of galactomannan, the saccharide indicates a saccharide in which the sugar chains of the main chain is shortened to 100 or less by digesting using mannosidase that selectively hydrolyzes mannose in a state where the side chain is maintained. The sugar chains of the main chain are preferably 5 or more.

In other words, a saccharide (A) is a saccharide in which a main chain is formed by dehydration of OH's at 1 and 4 positions of a carbohydrate having a pyranose structure and various sugar chains are bound to OH at 6 position. A compound (A) is the general term for compounds having a chemical structure of a saccharide (A), and includes, for example, those in which a part of a saccharide (A) is acetylated, methylated, aminated, or the like.

In addition, since starch is an extremely long molecule which has an $\alpha$-1,4 bond and an $\alpha$-1,6 structure and in which a large number of acinous structure is linked, the solubility thereof is low. When starch is left to stand in a dissolved state it is insolubilized (retrogradation), and industrial handling of starch in a dissolved state is difficult since the viscosity thereof is high. Therefore, in the method described in Japanese Unexamined Publication No. 8-134104, a cyclic glucan is synthesized by acting a 1,4-$\alpha$-glucan branching enzyme and 4-$\alpha$-glucanotransferase on starch to obtain a saccharide (A) in which a main sugar chain by a 1,4 bond has an average chain of 100 or less and 5 or more, a branch structure by a 1,6 bond is present, and the branch structure has a branched sugar chain has an average chain of 1 to 20, and a compound (A) having the saccharide structure.

(Enzyme)

As an enzyme usable for the invention, any enzyme may be used as long as the enzyme is capable of forming a glucan having a polymerization degree of 50 or more and a cyclic structure by acting on a saccharide having an $\alpha$-1,4-glycosidic bond and at least one $\alpha$-1,6-glycosidic bond. Examples of the usable enzyme include a 1,4-a-glucan branching enzyme (branching enzyme, Q-enzyme), 4-$\alpha$-glucanotransferase (D-enzyme, amylomaltase, dismutase), cyclodextrin glucanotransferase (CGTase), and the like, but not limited thereto.

(Branching enzyme)

Branching enzymes are present in various plants, animals, microorganisms such as bacteria, and the like, and the origin thereof is irrespective. A branching enzyme that is refined from Escherichia coli cloned with a branching enzyme gene derived from thermophilic bacteria is preferable from the viewpoint of that the optimum reaction temperature is high, or a branching enzyme derived from a potato is preferable from the viewpoint of that a large amount of an enzyme is easily obtainable.

(D-enzyme)

As D-enzyme, enzymes derived from various plants or microorganisms may be used, and a commercially available enzyme may also be used. D-enzyme was discovered from potatoes at the beginning, but it is known that D-enzyme is present in various plants and microorganisms such as Escherichia coli in addition to a potato. This enzyme is called as D-enzyme in the case of being derived from plants, and as amylomaltase in the case of being derived from microorganisms. Accordingly, the origin of the D-enzyme is irrespective, and those in which a gene coding for enzymes derived from plants is expressed using a host such as Escherichia coli may also be used.

(Starch)

As a raw material used for the invention, a saccharide having an α-1,4-glycosidic bond and at least one α-1,6-glycosidic bond may be used. Examples of such a saccharide include starch, partial degradation products of starch, amylopectin, glycogen, waxy starch, high amylose starch, soluble starch, dextrin, starch hydrolyzates, enzymatically synthesized amylopectin by phosphorylase, and the like.
Specifically, any commercially available starch may be used. For example, underground starch such as potato starch, sweet potato starch, arrowroot starch, and tapioca starch, and terrestrial starch such as corn starch, wheat starch, and rice starch may be used.

(Confirmation of having ring structure)

Confirmation that the glucan obtainable by the production method of the invention has an inner branched cyclic structure may be performed using an exo-type glucoamylase.
An exo-type glucoamylase is an enzyme hydrolyzing α-1,4-glycosidic bonds in order from the non-reducing terminal of a glucan of starch or the like. Although the speed is slow, it is known that the enzyme is capable of hydrolyzing α-1,6-glycosidic bonds from the non-reducing terminal. Amylose and amylopectin which do not have a cyclic structure are completely decomposed into glucose by an exo-type glucoamylase. However, regarding a glucan that has a cyclic structure in the molecule (a cyclic glucan having at least one α-1,6-glycosidic bond or a cyclic glucan having only α-1,4-glycosidic bonds), only non-cyclic structure moieties are decomposed by a glucoamylase, but cyclic structure moieties thereof are remained as a substance that is not decomposed by a glucoamylase (hereinafter, referred to as glucoamylase resistant component).
Whether this glucoamylase resistant component (cyclic structure moiety) has an internal branch structure (α-1, 6-glycosidic bond) can be determined by the sensitivity thereof to a debranching enzyme which disconnects α-1, 6 bonds.
In addition, a saccharide in which a main sugar chain by a 1,4 bond has an average chain of 100 or less, a branch structure is a 1,6 bond, and a branched sugar chain has an average chain of 1 to 20 according to the invention, and a saccharide structure in which a main sugar chain by a 1,4 bond has an average chain of 100 or less, a branch structure is a 1, 6 bond, and a branched sugar chain has an average chain of 1 to 20 are preferably cyclic.
A cyclic glucan having an inner branched cyclic structure (α-1,6-glycosidic bond) is completely decomposed into glucose by a concurrent use of a debranching enzyme and a glucoamylase.
On the other hand, a glucan of a cyclic structure which does not have an inner branched cyclic structure (having only α-1,4-glycosidic bonds) is not decomposed by a concurrent use of a debranching enzyme and an exo-type glucoamylase. This cyclic glucan is completely decomposed into glucose by a concurrent use of an endo-type α-amylase and glucoamylase.
By using these properties, it is possible to determine the quantity of cyclic structure moieties, branch structure moieties, and cyclic structure moieties having only α-1,4-glycosidic bonds, of a glucan.
The fact that a glucan of the invention has a cyclic structure is confirmed by the following properties (1) to (6).

(1) The number of a reducing terminal does not increase compared to a raw material (starch or the like). In other words, a reducing terminal is not detected. The quantity determination of the reducing terminal may be conducted by modified Park-Johnson method described in Hizukuri et al., Carbohydr. Res. 94: 205-213 (1981).
(2) When a glucoamylase of an exo-type amylase acts on a glucan of the invention, a glucoamylase resistant component is remained. The component is not decomposed even when causing a glucoamylase to act thereon after causing a phosphatase (manufactured by Sigma-Aldrich Co., LLC.) to act thereon.
(3) The glucoamylase resistant component is decomposed by isoamylase (manufactured by Hayashibara Bio chemical Laboratories) hydrolyzing an α-1, 6-glycosidic bond in starch, and become to be receivable the action of a glucoamylase.
(4) The glucoamulase resistant component is decomposed by an endo-type α-amylase (manufacture by Nagase ChemteX Corporation) hydrolyzing an α-1,4-glycosidic bond in starch, and becomes to be receivable the action of a glucoamylase.
(5) By hydrolysis of a glucan of the invention by the endo-type α-amylase of (4), isomaltosyl maltose (IMM) is produced. This conforms to the description that the smallest limit dextrin in a case where an endo-type α-amylase

acts on a glucan having an α-1,6-glycosidic bond is IMM (Yamamoto, T., Handbook of amylase and related enzymes, Pergamon Press, p 40-45 (1988)).

(6) When the molecular weight of the glucoamylase resistant component is analyzed by a laser ionization TOF-MS apparatus (manufactured by Shimadzu Corporation), the obtained value of molecular weight conforms to the theoretical value of a cyclic glucan, but does not conform to the theoretical value of a non-cyclic glucan .

The detection of the glucoamylase resistant component used for the confirmation of a cyclic structure moiety may be conducted as follows. For example, a glucoamylase is added to the glucan produced in the reaction described above, and, for example, reacted overnight at about 40°C. This reactant is heated for 10 minutes at 100°C, insoluble matters are removed by centrifugal separation. Ten times the amount of ethanol to the resultant is added thereto, and the remained polysaccharide is recovered as a precipitate by centrifugal separation. This operation is repeated one more time so as to obtain a glucoamylase resistant component. Provided that a short period of time (for example, 1 to 2 hours) is enough for the second treatment of the glucoamylase.

Further, when a raw material used in the invention is starch partly modified by a phosphate group, a pretreatment is needed for the detection of a glcoamylase resistant component. For example, a reaction product is dissolved in a 10 mM carbonic acid buffer solution (pH 9.4, including 10 mM $MgCl_2$ and 0.3 mM ZnCl2), reacted after adding a phosphatase, and then 10 times the amount of ethanol to the resultant is added to recover a precipitate. By applying the above described method to this precipitate, a glucoamylase resistant component may be obtained.

The polymerization degree and constituents of a glucoamylase resistant component are determined by analyzing the carbohydrate produced by reacting the glucoamylase resistant component with a carbohydrate hydrolase as described in (1) to (5) above. The hydrolysis includes a glucoamylase alone, a combination of a glucoamylase and an isoamylase, or a combination of a glucoamylase and an α-amylase and the like. The reaction is performed, for example, dissolving a glucoamylase in distilled water so as to be 0.2% (w/v), adding an appropriate amount of each of the degrading enzymes described above, and reacting at 30 to 45°C for appropriate time (for example, 1 hour). Degradation products of glucoamylase resistant component is subjected to an analysis by a carbohydrate analysis system manufactured by Dionex Corporation (solution sending system: DX300, detector: PAD-2, column: Carbo Pac PA100). Elution is performed, for example, under conditions of flow rate: 1 mL/min, concentration of NaOH: 150 mM, concentration of sodium acetate: 0 min - 50 mM, 2 min - 50 mM, 37 min - 350 mM, 45 min - 850 mM, 47 min - 850 mM. By this analysis, the polymerization degree of a glucoamylase resistant component and carbohydrates produced by decomposition are determined.

(Adjustment of polymerization degree)

The polymerization degree of a glucan having an inner branched cyclic structure moiety and a branch structure moiety obtainable by the method of the invention may be adjusted. For example, the sugar chains of the branch structure are disconnected by acting an exo-type amylase, for example, a glucoamylase on the glucan obtained so that a glucan the polymerization degree is lower may be obtained. This method is also included in the invention.

<Water soluble polymer>

A high refractive index layer in the optical reflection film of the invention may simultaneously use another water soluble polymer together with an alkyl ether compound of a polysaccharide, orasaccharide (A) having a main sugar chain by a 1, 4 bond and a branch structure of a 1, 6 bond or compound (A) having the saccharide structure.

(Water soluble polymers)

As a water soluble polymer applicable to the invention, polymers having a reactive functional group may be exemplified. Examples thereof include polyvinyl alcohols, polyvinyl pyrrolidones, acrylic resins such as polyacrylic acid, acrylic acid-acrylonitrile copolymer, potassium acrylate-acrylonitrile copolymer, vinyl acetate-acrylic ester copolymer, and acrylic acid-acrylic ester copolymer, styrene acrylic acid resins such as styrene-acrylic acid copolymer, styrene-methacrylic acid copolymer, styrene-methacrylic acid-acrylic ester copolymer, styrene-α-methyl styrene-acrylic acid copolymer, and styrene-α-methyl styrene-acrylic acid-acrylic ester copolymer, vinyl acetate-based copolymers such as styrene-sodium styrene sulfonate copolymer, styrene-2-hydroxyethyl acrylate copolymer, styrene-2-hydroxyethyl acrylate-potassium styrene sulfonate copolymer, styrene - maleic acid copolymer, styrene-anhydrous maleic acid copolymer, vinyl acetate-maleic ester copolymer, vinyl acetate-crotonic acid copolymer, and vinyl acetate-acrylic acid copolymer, inorganic polymers, polysaccharide thickeners and salts thereof. Among these, particularly preferable examples thereof include polyvinyl alcohols, polyvinyl pyrrolidones, and copolymers including them.

A weight average molecular weight of a water soluble polymer is preferably 1, 000 or more and 200, 000 or less, more preferably 3,000 or more and 40,000 or less.

Examples of the polyvinyl alcohol which can preferably be used in the invention also include modified polyvinyl alcohols such as a polyvinyl alcohol in which a terminal thereof is modified with a cation or an anion-modified polyvinyl alcohol having an anionic group, in addition to a common polyvinyl alcohol obtained by hydrolyzing polyvinyl acetate.

As the polyvinyl alcohol obtained by hydrolyzing vinyl acetate, those having an average polymerization degree of 1,000 or more are preferably used, and those having an average polymerization degree of 1,500 to 5,000 are particularly preferably used. In addition, those having a saponification degree of 70 to 100% are preferably used, and those having a saponification degree of 80 to 99.5% are particularly preferably used.

As the cation-modified polyvinyl alcohol, a polyvinyl alcohol having a primary to tertiary amino group or a quaternary ammonium group in the main chain or side chain of the polyvinyl alcohol described above is exemplified as described in Japanese Unexamined Publication No. 61-10483, and it is obtained by saponification of a copolymer of an ethylenically unsaturated monomer having a cationic group, and vinyl acetate.

Examples of the ethylenically unsaturated monomer having a cationic group include trimethyl-(2-acrylamide-2,2-dimethylethyl)ammonium chloride, trimethyl-(3-acrylamide-3,3-dimethylpropyl)ammonium chloride, N-vinylimidazole, N-vinyl-2-methylimidazole, N-(3-dimethylaminopropyl)methacrylamide, hydroxyethyltrimethylammonium chloride, trimethyl- (2-methacrylamidepropyl) ammonium chloride, N-(1, 1-dimethyl-3-dimethylaminopropyl)acrylamide, and the like. Proportion of a monomer containing a cation-modified group in a cation-modified polyvinyl alcohol is 0.1 to 10 mol%, preferably 0.2 to 5 mol% with respect to vinyl acetate.

Examples of the anion-modified polyvinyl alcohol include a polyvinyl alcohol having an anionic group as described in Japanese Unexamined Publication No. 1-206088, a copolymer of vinyl alcohol and a vinyl compound having a water soluble group as described in Japanese Unexamined Publication Nos. 61-237681 and 63-307979, and a modified polyvinyl alcohol having a water soluble group as described in Japanese Unexamined Publication No. 7-285265.

In addition, examples of the nonion-modified polyvinyl alcohol include a polyvinyl alcohol derivative in which a polyalkylene oxide group is added to a part of vinyl alcohol as described in Japanese Unexamined Publication No. 7-9758, a block copolymer of a vinyl compound having a hydrophobic group and vinyl alcohol described in Japanese Unexamined Publication No. 8-25795, and the like. Polyvinyl alcohols may be employed in combinations of two or more types being different in the degree of polymerization or in kinds of modifications.

In the invention, when a polymer having a reactive functional group is used, a curing agent may also be used. When the polymer having a reactive functional group is a polyvinyl alcohol, boric acid and a salt thereof, or an epoxy-based curing agent are preferable.

In the invention, the above described water soluble polymer is preferably contained in a range of 5.0 mass% or more and 50 mass% or less, and more preferably 10 mass% or more and 40 mass% or less with respect to the total mass of a high refractive index layer. Provided that, when, for example, an emulsion resin is simultaneously used with a water soluble polymer, the content of the water soluble polymer may be 3.0 mass% or more. If a small amount of a water soluble polymer is contained, at the time of drying after coating a high refractive index layer, a tendency that the film surface thereof is disturbed and the transparency thereof is deteriorated becomes great. On the other hand, if the content of a water soluble polymer is 50 mass% or less, the relative content of a metal oxide becomes appropriate, and it becomes easy to set the difference of refractive indexes between a high refractive index layer and a low refractive index layer to be large.

<High refractive index layer in infrared shielding film>

Meanwhile, regarding an infrared shielding film according to the invention, at least one of a high refractive index layer and a low refractive index layer constituting the infrared shielding film includes a saccharide (A) in which a main sugar chain by a 1,4 bond has 100 or less average chains, a branch structure by a 1, 6 bond is present, and the branched sugar chain has 1 to 20 average chains, or compound (A) having a saccharide structure in which a main sugar chain by a 1,4 bond has 100 or less average chains, a branch structure by a 1,6 bond is present, and the branched sugar chain has 1 to 20 average chains.

In addition, regarding the infrared shielding film according to the invention, a metal oxide is preferably included in at least one of a high refractive index layer and a low refractive index layer constituting the infrared shielding film.

A refractive index of the high refractive index layer of the infrared shielding film according to the invention is preferably 1.70 to 2.50 and more preferably 1. 80 to 2.20. In addition, a refractive index of the low refractive index layer is preferably 1.10 to 1.60 and more preferably 1.30 to 1.50.

<Metal oxides>

Examples of a metal oxide which can be used in the infrared shielding film of the invention include titanium dioxide, zirconium dioxide, zinc oxide, synthetic amorphous silica, colloidal silica, alumina, colloidal alumina, lead titanate, red lead, chrome yellow, zinc yellow, chromium oxide, ferric oxide, iron black, copper oxide, magnesium oxide, magnesium

hydroxide, strontium titanate, yttrium oxide, niobium oxide, europium oxide, lanthanum oxide, zircon, and tin oxide, and these metal oxides may be appropriately simultaneously used for each of a low refractive index layer and a high refractive index layer which are described below in order to adjust the refractive index thereof.

Among the metal oxides described above, titanium dioxide, zirconium dioxide, zinc oxide, and the like are suitable for a high refractive index layer, and titanium dioxide is particularly preferable. Specific examples of titanium dioxide include an anatase-type titanium dioxide, a rutile-type titanium dioxide, a brookite-type titanium dioxide. Further, a compound in which a titanium-based oxide is doped with a dissimilar metal atom such as tin, barium, vanadium, manganese, cobalt, nickel, gallium, aluminum, germanium, antimony, indium, palladium, ruthenium, rhodium, niobium, zirconium, magnesium, yttrium, lanthanum, europium, zinc, lead, chromium, iron, copper, silver, gold, platinum, tungsten, or cerium is included in the examples.

Titanium dioxide for the effect of the invention is preferably a rutile-type titanium dioxide of which refractive index is high and photocatalytic ability is low.

In addition, a preferable mode of titanium dioxide for the invention is preferably a titanium dioxide sol in which titanium dioxide fine particles are dispersed in water or an organic solvent.

A preparation method of titanium dioxide which may be used for the invention, for example, may refer to Japanese Unexamined Publication Nos. 63-17221, 7-819, 9-165218, and 11-43327.

In addition, other preparation methods of titanium dioxide, for example, may refer to Japanese Unexamined Publication Nos. 63-17221, 7-819, 9-165218, and 11-43327.

A primary particle diameter as a volume average particle diameter of titanium dioxide fine particles is preferably 4 nm to 50 nm, and more preferably 4 nm to 30 nm.

A volume average particle diameter of titanium dioxide fine particles is measured by the same method described above.

An $\alpha$-amino acid is preferably added for the purpose of improving the dispersibility of metal oxide particles.

Specific examples of the amino acid preferably include glycine, serine, threonine, hydroxyproline, phenylalanine, and the like.

In the high refractive index layer of the infrared shielding film according to the invention, titanium dioxide and the metal oxide described above may be mixed, or plural kinds of titanium dioxide may be mixed. Among metal oxides contained in any of the layers, a preferable content of titanium dioxide is 30 mass% to 90 mass%, preferably 70 mass% to 85 mass%. A higher content of titanium dioxide is preferable from the viewpoint of increasing the refractive index of a layer, but it is not possible to fill the gap of titanium dioxide particles with an organic binder and the like so that the portion is remained as a void. Therefore, the content of other components is preferably 10 mass% or more.

<Saccharide (A) and compound (A)>

Regarding the infrared shielding film according to the invention, a saccharide (A) and/or compound (A) included in at least one of a high refractive index layer and a low refractive index has the same meaning as the saccharide (A) and/or compound (A) described in the section of < saccharide (A) having main sugar chain by 1, bond and branch structure of a 1,6 bond, and compound (A) having the saccharide structure>.

In addition, regarding an infrared shielding film according to the invention, particles of the metal oxide are preferably produced in the presence of the saccharide (A) or compound (A). In other words, the saccharide (A) and/or compound (A) preferably form a composite with metal oxide particles. Therefore, a composite of the saccharide (A) and/or compound (A) having the saccharide structure and metal oxide particles may be included in any of a high refractive index layer and a low refractive index layer, and more preferably included in a high refractive index layer.

(Composite with metal oxide particle)

A compound having a saccharide structure in which a main sugar chain by a 1,4 bond has 100 or less (5 or more) average chains, a branch structure by a 1, 6 bond is present, and the branched sugar chain has 1 to 20 average chains may be preferably added during the process producing well-known metal oxide particles from the viewpoint of being strongly bound to the metal oxide particles.

For example, rutile-type titania particles may be synthesized as follows. Tamarind seed gum in a 1 L glass beaker was decomposed by a 1,4-$\alpha$-D-glucan glucohydrolase so that the chains of the main chain are 10, and the resultant was heated at 80°C so as to cause the enzyme to lose its activity, thereby obtaining XG-1 (described in Example 1). To 600 g of the aqueous solution of 1 mass% XG-1, 240 g of an aqueous titanium oxychloride solution having a $TiO_2$ concentration of 25% (60 g in terms of $TiO_2$) and 5 g of zirconium oxychloride powder having a $ZrO_2$ concentration of 35% (1.8 g in terms of $ZnO_2$) were added, and the total amount thereof was adjusted to 1 L with water, thereby confirming dissolution (1).

Into a 2 L flask equipped with a stirring means and a reflux condenser, 1 kg of water, 20 g of an aqueous stannic

chloride solution having a $SinO_2$ concentration of 30% (6 g in terms of $SnO_2$), and 16 g of 36% hydrochloric acid were put, and heated to 60°C while stirring. 1 L of the aqueous solution (1) above was added dropwise thereto over 15 minutes while maintaining the temperature at 60°C. The resultant was heated to the boiling temperature after completion of dropping, and heated and refluxed for 3 hours in a boiling state. The resultant was cooled down to 40°C after stopping heating, the pH thereof was adjusted to 5.0, and decantation was repeated 3 times. After boiling for 1 hour at 100°C, the resultant was cooled down to room temperature and diluted with pure water so as to adjust the concentration of $TiO_2$ to be 20%, thereby obtaining 300 g of a titanium dioxide sol (solution A).

Titania sol thus obtained was dried and subjected to an X ray diffraction method to confirm the crystal system thereof. The analysis result exhibited that the titania sol is a rutile type. From the surface analysis of the titania sol, the presence of the polysaccharide of the raw material was confirmed.

<Organic binder>

In the high refractive index layer of the infrared reflective layer constituting the infrared shielding film according to the invention, a water soluble polymer used for the optical reflection film described above is preferably included as an organic binder.

Among the water soluble polymers used for the optical reflection film described above, a synthetic resin such as gelatin, polyvinyl alcohol, polyvinyl pyrrolidone, or polyethylene oxide, an inorganic polymer, a polysaccharide thickener, and the like are preferably exemplified as an infrared shielding film. Polyvinyl alcohol and gelatin are particularly preferable for the invention. One kind or plural kinds of these water soluble polymers may be mixed.

The water soluble polymer according to the invention is a high molecular weight compound dissolving in a medium of water or warm water at a concentration of 1 mass% or more, and preferably 3 mass% or more.

The concentration of the water soluble polymer in the coating liquid for forming a high refractive index layer used for the infrared shielding film according to the invention is preferably 0.5 to 60 mass%, and more preferably in a range of 5 to 40 mass%.

Since the polyvinyl alcohol has the same meaning as the polyvinyl alcohol described in (water soluble polymers) above, the description thereof is not repeated.

In the invention, when these polymers are used, a curing agent may be used. For example, in a case of a polyvinyl alcohol, boric acid and a salt thereof, or an epoxy-based curing agent described below is preferable.

(Natural polymer)

As a water soluble polymer of an infrared shielding film according to the invention, gelatin of a natural polymer may be used. As the gelatin, an enzyme-treated gelatin in which enzyme treatment is performed during the process of the gelatin, and a gelatin derivative in addition to an acid-treated gelatin and an alkali-treated gelatin. In other words, gelatin has an amino group, an imino group, a hydroxyl group, and a carboxyl group as functional groups in its molecule, and the gelatin may be modified by treating with a reagent having a group which reacts with those groups.

Further, a polysaccharide of a natural polymer derived from red algae such as gellan gum, agar, κ-carrageenan, λ-carrageenan, τ-carrageenan, or furcellaran, and a polysaccharide such as xanthan gum, konjak mannan, locust bean gum, guar gum, pectin, gum Arabic, tamarind gum, sodium alginate, karaya gum, gum tragacanth, furcellaran, or pullulan can be used in combination.

[Low refractive index layer]

< Low refractive index layer in optical reflection film>

An optical reflection film according to the invention has a low refractive index layer that has a lower refractive index than the high refractive index layer described above. The low refractive index layer preferably has a refractive index of 1.6 or lower, and more preferably 1.3 to 1.5.

In the low refractive index layer of the optical reflection film according to the invention, those in which metal oxide particles are dispersed in a water soluble polymer may be used. Further, as a water soluble polymer compound used in a low refractive index layer, a compound that is the same as the water soluble polymer described in the high refractive index layer, in other words, cellulose compounds, polysaccharide thickeners, polymers having a reactive functional group, or various gelatin compounds may be used. Further, a water soluble polymer and the like used in a high refractive index layer and a low refractive index layer are same or different from each other, but preferably same as each other from the viewpoint of performing a simultaneous multilayer coating.

In a low refractive index layer constituting the optical reflection film, the saccharide (A) or the compound (A) described above may be contained.

A low refractive index layer of the optical reflection film according to the invention may be constituted by only polymers or may also contain metal oxide particles, but in a case of containing metal oxide particles, using silicon dioxide is preferable and using a colloidal silica sol is particularly preferable.

In the invention, silicon dioxide preferably has an average particle diameter of 100 nm or less. An average particle diameter (particle diameter in a dispersion state before coating) of a primary particle of silicon dioxide dispersed in a primary particle state is preferably 20 nm or less, more preferably 10 nm or less. In addition, an average particle diameter of a secondary particle is preferably 30 nm or less from the viewpoint of having a small amount of haze and being excellent in visible light transmitting property.

An average particle diameter of a metal oxide according to the invention is obtained by observing particles themselves or particles appeared on the cross section or surface of a refractive index layer with an electron microscope, measuring the particle diameter of 1000 arbitrary particles, and calculating as a simple average value thereof (number average). Here, the particle diameter of each particle is expressed as a diameter when assuming a circle corresponding to the projected area.

<Low refractive index layer in infrared shielding film>

In an infrared shielding film according to the invention, a low refractive index layer constituting the infrared shielding film may contain the saccharide (A) or compound (A) described above.

In addition, in the infrared shielding film according to the invention, a low refractive index layer constituting the infrared shielding film may contain a metal oxide.

It is more preferable that the low refractive index layer of an infrared shielding film according to the invention contain at least one of the saccharide (A) and compound (A) described above, particles of a metal oxide, and an organic binder as necessary.

Further, a preferable refractive index of a low refractive index layer of an infrared shielding film is 1.1 to 1.6, more preferably 1.3 to 1.5.

<Saccharide (A) and compound (A)>

A saccharide (A) and/or compound (A) included in at least one of a high refractive index layer and a low refractive index layer in an infrared shielding film have the same meaning as the saccharide (A) and/or compound (A) described in the section of <saccharide (A) having main sugar chain by 1,4 bond and branch structure of a 1,6 bond, and compound (A) having the saccharide structure>.

In addition, in an infrared shielding film according to the invention, as the high refractive index layer described above, particles of a metal oxide are preferably produced in the presence of the saccharide (A) or compound (A) described above. In this manner, the saccharide (A) and/or compound (A) preferably form a composite with metal oxide particles. Therefore, a composite of the saccharide (A) and/or compound (A) having the saccharide structure and metal oxide particles may be included in any of a high refractive index layer and a low refractive index layer.

<Metal oxide>

As a metal oxide used for a low refractive index layer of an infrared shielding film according to the invention, metal oxides described in the high refractive index layer in the infrared shielding film may be preferably used. Among them, as the particles of a metal oxide, using silicon dioxide particles are preferable and using an acid colloidal silica sol is particularly preferable.

Silicon dioxide particles according to the invention preferably have an average particle diameter of 100 nm or less. An average particle diameter (particle diameter in a dispersion state before coating) of a primary particle of silicon dioxide dispersed in a primary particle state is preferably 20 nm or less, more preferably 1.0 nm or less. In addition, an average particle diameter of the secondary particle is preferably 30 nm or less from the viewpoint of having a small amount of haze and being excellent in visible light transmitting property.

The content of a metal oxide of a low refractive index layer is preferably 30 mass% or more and 95 mass% or less, more preferably 60 mass% or more and 95 mass% or less. When the content of a metal oxide is 30 mass% or more, it is possible to obtain a low refractive index. Further, when the content is 60 mass% or more, it is still more preferable since the metal oxide has a pore structure. However, when the content of a metal oxide is 95 mass% or more, binding between the metal oxides is difficult so that formation of a coating film becomes impossible.

<Organic binder>

As an organic binder used for a low refractive index layer of an infrared shielding film according to the invention,

organic binders described in the high refractive index layer in an infrared shielding film may be preferably used. Therefore, detailed description thereof is omitted herein. The concentration of a water soluble polymer in a coating liquid for forming a low refractive index layer used for an infrared shielding film according to the invention is preferably 0.5 to 60 mass%, and more preferably a range of 5 to 40 mass%.

Further, in an infrared reflective layer of the invention, a layer constitution in which the undermost layer adjacent to a substrate is a low refractive index layer and the outermost layer is also a low refractive index layer is preferable.

[Other constituents of film according to the invention]

<Other constituents of optical reflection film and optical reflection body>

<Other additives>

A high refractive index layer and low refractive index layer of the optical reflection film according to the invention may use additives described below in the sections of emulsion resins or other additives as necessary.

(Emulsion resin)

In the invention, a high refractive index layer or the low refractive index layer of the optical reflection film according to the invention may preferably further contain an emulsion resin.

The emulsion resin of the invention is resin fine particles that are obtained by emulsion polymerization of an oil soluble monomer using a polymerization initiator in an aqueous solution containing a dispersant while maintaining the monomer in an emulsion state.

As a dispersant used at the time of polymerization of an emulsion, generally, a polymeric dispersant such as polyoxyethylene nonylphenyl ether, polyoxyethylene lauryl ether, hydroxyethyl cellulose, or polyvinyl pyrrolidone in addition to a low molecular weight dispersant such as an alkylsulfonate salt, an alkylbenzensulfonate salt, diethylamine, ethylenediamine, or a quaternary ammonium salt is exemplified.

An emulsion resin according to the invention is a resin in which fine resin particles, for example, an average particle diameter of 0.01 to 2.0 $\mu$m are dispersed in an aqueous medium in an emulsion state, and is obtained by an emulsion polymerization of an oil soluble monomer using a polymeric dispersant having a hydroxyl group. Depending on the kinds of dispersants which will be used, a fundamental difference in polymer constituents of the obtained emulsion resin is not observed. However, when an emulsion polymerization is performed using a polymeric dispersant having a hydroxyl group, since the presence of a hydroxyl group at least on the surface of a fine particle is presumed, the chemical and physical properties of the emulsion are different from the emulsion resin polymerized using other dispersants.

A polymeric dispersant having a hydroxyl group is a dispersant of a high molecular weight having a weight average molecular weight of 10,000 or more and substituted with a hydroxyl group at a side chain or a terminal. Examples thereof include a dispersant in which 2-ethylhexyl acrylate is copolymerized with an acrylic polymer such as sodium polyacrylate or polyacrylamide, a polyether such as polyethylene glycol or polypropylene glycol, and a polyvinyl alcohol, and a polyvinyl alcohol is particularly preferable.

Examples of the polyvinyl alcohol used as a polymeric dispersant include a modified polyvinyl alcohol a cation-modified polyvinyl alcohol, an anion-modified polyvinyl alcohol having an anionic group such as a carboxyl group, or a silyl-modified polyvinyl alcohol having a silyl group in addition to a common polyvinyl alcohol obtained by hydrolysis of polyvinyl acetate. As the average polymerization degree of a polyvinyl alcohol is high, the effect suppressing the occurrence of cracks is great when forming an ink absorbing layer. However, when the average polymerization degree is 5,000 or less, the viscosity of an emulsion is not high and handling a polyvinyl alcohol at the time of production is easy. Therefore, the average polymerization degree of a polyvinyl alcohol is preferably 300 to 5, 000, more preferably 1, 500 to 5, 000, and particularly preferably 3,000 to 4,500. The saponification degree of a polyvinyl alcohol is preferably 70 to 100 mol%, and more preferably 80 to 99.5 mol%.

As a resin emulsion polymerized with the polymeric dispersant, an ethylene monomer such as an acrylic ester, a methacrylic ester, a vinyl compound, or an styrene compound, and a homopolymer or copolymer of diene compounds such as butadiene and isoprene are exemplified. For example, an acrylic resin, a styrene-butadiene-based resin, and an ethylene-vinyl acetate-based resin and the like are exemplified.

<Other additives of each refractive index layer>

Various additives applicable to the high refractive index layer and the low refractive index layer according to the invention are given below. For example, it is possible to contain various well-known additives such as an ultraviolet absorber described in Japanese Unexamined Publication No. 57-74193, Japanese Unexamined Publication No.

57-87988, and Japanese Unexamined Publication No. 62-261476, a discoloration inhibitor, and various anionic, cationic, or nonionic surfactants described in Japanese Unexamined Publication No. 57-74192, Japanese Unexamined Publication No. 57-87989, Japanese Unexamined Publication No. 60-72785, Japanese Unexamined Publication No. 61-146591, Japanese Unexamined Publication No. 1-95091, and Japanese Unexamined Publication No. 3-13376, a fluorescent brightening agent, a pH regulator such as sulfuric acid, phosphoric acid, acetic acid, citric acid, sodium hydroxide, potassium hydroxide, and potassium carbonate, an antifoaming agent, a lubricant agent such as diethylene glycol, a preservative, an antistatic agent, and a matting agent described in Japanese Unexamined Publication No. 59-42993, Japanese Unexamined Publication No. 59-52689, Japanese Unexamined Publication No. 62-280069, Japanese Unexamined Publication No. 61-242871, and Japanese Unexamined Publication No. 4-219266.

<Substrate>

It is desirable that a resin substrate be used as a substrate applied to the optical reflection film of the invention, and a so-called film support is preferable. The film support may be transparent or opaque, and various resin films may be used. It is possible to use a polyolefin film (polyethylene, polypropylene, and the like), a polyester film (polyethylene terephthalate, polyethylene naphthalate, and the like), polyvinyl chloride, cellulose triacetate, and the like. It is preferable to use a polyester film. Although not particularly limited, it is preferable to use, as a polyester film (hereafter, referred to as polyester), polyester having a film forming property and including a dicarbon acid component and a diol component as a main component. Examples of the dicarbon acid component as a main component include terephthalic acid, isophthalic acid, phthalic acid, 2,6-naphthalenedicarboxylic acid, 2,7-naphthalenedicarboxylic acid, diphenyl sulfone dicarboxylicacid, diphenyl ether dicarboxylic acid, diphenyl ethane dicarboxylic acid, cyclohexane dicarboxylic acid, diphenyl dicarboxylic acid, diphenyl thioether dicarboxylic acid, diphenyl ketone dicarboxylic acid, phenyl indane dicarboxylic acid, and the like.

In addition, examples of the diol component may include ethylene glycol, propylene glycol, tetramethylene glycol, cyclohexanedimethanol, 2,2-bis(4-hydroxyphenyl)propane, 2,2-bis(4-hydroxyethoxyphenyl)propane,l bis(4-hydroxyphenyl)sulfone, bisphenol fluorene dihydroxyethyl ether, diethylene glycol, neopentylglycol, hydroquinone, cyclohexanediol, and the like. Among types of polyester including these as a main component, it is preferable to use polyester including, as a main component, terephthalic acid or 2,6-naphthalenedicarboxylic acid as a dicarboxylic acid component, and including ethylene glycol or 1,4-cyclohexanedimethanol as a diol component in terms of a transparency, a mechanical strength, a dimensional stability, and the like. Above all, it is preferable to use polyester including polythylene telephthalate or polyethylene naphthalate as a main component, copolyester containing terephthalic acid, 2,6-naphthalenedicarboxylic acid, and ethylene glycol, and polyester including a mixture of two or more types of polyester as a main component.

It is preferable that a thickness of the resin substrate according to the invention is 10 to 300 μm, more preferable 20 to 150 μm. Two resin substrates of the invention may overlap each other. In this case, types thereof may be the same as or different from each other.

<Method of manufacturing optical reflection film>

A method of manufacturing an optical reflection film of the invention is characterized in that at least one unit including a high refractive index layer and a low refractive index layer is formed on a resin substrate, and the high refractive index layer is formed using a coating liquid for forming the high refractive index layer containing at least one carbohydrate selected from the group consisting of a polysaccharide alkyl ether compound, a saccharide (A), and a compound (A), and metal oxide particles. Further, it is preferable that the high refractive index layer and the low refractive index layer are formed using an aqueous simultaneous multilayer coating.

A unit including the high refractive index layer and the low refractive index layer is laminated on the resin substrate in the method of manufacturing an optical reflection film of the invention. Specifically, it is preferable to use a simultaneous multilayer coating, and form a laminated body by drying so that the high refractive index layer and the low refractive index layer are alternately laminated.

For example, it is preferable to use, as a coating method, a roll coat method, a rod bar coating method, an air knife coatingmethod, a spray coating method, acurtaincoating method, or a slide bead coating method using a hopper described in US 2,761,419 and US 2,761,791, an extrusion coating method, and the like.

A viscosity during a coating of a coating liquid for a high refractive index layer and a coating liquid for a low refractive index layer when a simultaneous multilayer coating is performed is preferably in a range of 50 to 500 mPa·s, more preferably in a range of 70 to 300 mPa·s.

A viscosity of a coating liquid for forming an high refractive index layer and forming a low refractive index layer of the optical reflection film according to the invention is preferably 50 to 500 mPa·s as a viscosity at 40°C.

In addition, a viscosity at 15°C of the coating liquid is preferably 100 mPa·s or more, more preferably 100 to

30, 000 mPa·s, even more preferably 3, 000 to 30, 000 mPa·s, and most preferably 10,000 to 30,000 mPa·s.

Referring to a coating and drying method, it is preferable to heat a coating liquid for a high refractive index layer and a coating liquid for a low refractive index layer to 30°C or higher to perform a coating, and then temporarily cool down a temperature of a formed coating film to 1 to 15°C, and perform a drying at 10°C or higher. More preferably, as a drying condition, a wet-bulb temperature is set to a range of 5 to 50°C, and a temperature of a film surface is set to a range of 10 to 50°C. In addition, it is preferable to perform a horizontal set scheme as a cooling scheme immediately after a coating in terms of a uniformity of a formed coating film.

In the invention, when the coating liquid for a high refractive index layer is prepared, it is preferable to form a high refractive index layer of an optical reflection film using an aqueous coating liquid for a high refractive index layer prepared by adding and dispersing a rutile type titanium dioxide having a volume average particle diameter of 100 nm or less, and at least one carbohydrate selected from the group consisting of the polysaccharide alkyl ether compound, the saccharide (A), and the compound (A). In this instance, it is preferable that the preparation is performed by adding, as a rutile type titanium dioxide, an aqueous titanium dioxide sol having a pH of 1.0 or more and 3.0 or less, and having a positive zeta potential of a titanium particle to a coating liquid for a high refractive index layer.

<Film design of optical reflection film>

In the invention, it is preferable that a refractive index difference between at least two layers (a high refractive index layer and a low refractive index layer) adjacent to each other is 0.2 or more, more preferably 0.3 or more. In addition, even though an upper limit is not limited, the upper limit is normally 1.4 or less.

A reflection on an adjacent interfacial layer is dependent on a refractive index ratio between layers. Thus, as the refractive index ratio increase, a reflectance increases. In addition, when an optical path difference of reflected light on a layer surface and reflected light on a bottom of a layer corresponds to a relation expressed by $n \cdot d$ = wavelength/4 as seen from a single layer film, it is possible to perform a control so that reflected light is strengthened by a phase difference, and a reflectance may be increased. Herein, n denotes a refractive index, d denotes a physical film thickness of a layer, and $n \cdot d$ denotes an optical film thickness. When an optical path difference is used, a reflection may be controlled. A refractive index of each layer and a film thickness is controlled using the relation to control a reflection of visible light or near infrared light. That is, it is possible to enhance a reflectance of a specific wavelength region by a refractive index of each layer, a film thickness of each layer, and a laminating method of each layer.

The optical reflection film of the invention may be set to a visible light reflection film or an infrared shielding film according to the invention by changing a specific wavelength region which enhances a reflectance. That is, the optical reflection film is a visible light reflection film when a specific wavelength region which enhances a reflectance is set to a visible light region, and is an infrared shielding film when the specific wavelength region is set to the near infrared region.

When the optical reflection film of the invention is used as a heat barrier film, the optical reflection film may be an infrared shielding film. It is preferable that a multi-layer film in which layers having different refractive indexes are laminated be formed on a polymer film, and an optical film thickness and a unit are designed so that a transmittance of a visible light region indicated by JIS R3106-1998 is 50% or more, and a region having a reflectance exceeding 40% is included in a region having a wavelength of 900 to 1,400 nm.

An infrared region in an incident spectrum of solar direct delivery light is related to an increase in a room air temperature, and it is possible to suppress an increase in a room air temperature by shielding the infrared region. When a cumulative energy ratio from a shortest wavelength (760 nm) to a longest wavelength 3,200 nm of infrared light is considered based on a double value coefficient described in the Japanese Industrial Standards JIS R3106, gross energy of an entire infrared region from a wavelength 760 nm to a longest wavelength 3,200 nm is set to 100, and cumulative energy from 760 nm to each wavelength is considered, total energy from 760 nm to 1,300 nm accounts for 75% of a whole infrared region. Thus, an energy saving effect is efficient when a wavelength region up to 1,300 nm is shielded.

When a reflectance of the near infrared light region (760 to 1,300 nm) is set to about 80% or more at a maximum peak value , a decrease in an effective temperature is obtained by a sensory evaluation. For example, there is a clear difference when an effective temperature at a window racing a southeast method in the morning in August is shielded until a reflectance of the near infrared light region reaches about 80% or more at a maximum peak value.

As a result of obtaining a multi-layer film structure to be used to have the function by an optical simulation (FTG Software Associates Film DESIGN Version 2.23.3700), it is found that an excellent characteristic is acquired when a high refractive index layer having a refractive index or 1.9 or more, preferably 2.0 or more is used, and six or more layers are laminated. For example, in view of a simulation result of a model in which eight layers of a high refractive index layer and a low refractive index layer (refractive index = 1.35) are alternately laminated, a reflectance fails to reach 70% when a refractive index of a high refractive index layer is 1.8, and a reflectance of about 80% is obtained when a high refractive index layer is 1.9. In addition, in a model in which a high refractive index layer (refractive index = 2.2) and a low refractive index layer (refractive index = 1.35) are alternately laminated, a reflectance fails to reach 60% when the number of laminated layers is four, and a reflectance of about 80% is obtained when six layers are laminated.

<Another component of infrared shielding film>

(Other additives of refractive index layer)

A high refractive index layer and a low refractive index layer of the infrared shielding film according to the invention may contain various additives as necessary.

For example, it is possible to contain various well-known additives such as an ultraviolet absorber described in Japanese Unexamined Publication No. 57-74193, Japanese Unexamined Publication No. 57-87988, and Japanese Unexamined Publication No. 62-261476, various anionic, cationic, nonionic surfactants described in Japanese Unexamined Publication No. 57-74192, Japanese Unexamined Publication No. 57-87989, Japanese Unexamined Publication No. 60-72785, Japanese Unexamined Publication No. 61-146591, Japanese Unexamined Publication No. 1-95091, and Japanese Unexamined Publication No. 3-13376, a pH regulator such as sulfuric acid, phosphoric acid, acetic acid, citric acid, sodium hydroxide, potassium hydroxide, and potassium carbonate, an antifoaming agent, a lubricant agent such as diethylene glycol, a preservative, an antistatic agent, and a matting agent described in Japanese Unexamined Publication No. 59-42993, Japanese Unexamined Publication No. 59-52689, Japanese Unexamined Publication No. 62-280069, Japanese Unexamined Publication No. 61-242871, and Japanese Unexamined Publication No. 4-219266.

A method of forming an infrared absorption layer, a hard coat layer, and the like that may be formed in addition to an infrared reflection layer is not particularly limited. However, it is preferable that the layers are formed by a wet coating method such as a die coater method, a rotogravure roll coater, a spin coating method, a spraying method, a blade coating method, an air knife coat method, a dip-coating method, a transfer method, and the like, or a dry coating method such as an evaporation method.

As a method of a hardening by a ultraviolet irradiation, ultraviolet light having a wavelength region of 100 to 400 nm, preferably 200 to 400 nm radiated from an ultrahigh pressure mercury lamp, a high-pressure mercury lamp, a low-pressure mercury lamp, a carbon arc, a metal-halide lamp, and the like may be irradiated, or an electron beam having a wavelength region of 100 nm or less radiated from a scanning or curtain type electron beam accelerator may be irradiated.

<Method of manufacturing infrared shielding film>

An infrared shielding film of the invention is configured by laminating a unit including a high refractive index layer and a low refractive index layer on a substrate, and forms an infrared reflection layer. Specifically, it is preferable that a laminated body is formed by alternately wet coating and drying an aqueous coating liquid for a high refractive index layer and coating liquid for a low refractive index layer.

It is preferable that each of a coating liquid for a low refractive index layer of an infrared shielding film and a coating liquid for a high refractive index layer of an infrared shielding film are formed by appropriately adding a saccharide (A) or a compound (A), an organic binder, and an additive described below to the metal oxide and at least one of the coating liquid for a low refractive index layer and the coating liquid for a high refractive index layer, and performing an mixing and dispersing in an aqueous solvent. The aqueous solvent refers to a solvent containing 70% or more of water, and any solvent mixing with the solvent may be mixed. It is preferable to contain 90% or more of water, more preferably 95% or more of water.

A scheme described above the same as that of the optical reflection film may be employed as a coating scheme.

It is preferable that a viscosity of a coating liquid for a high refractive index layer and a coating liquid for a low refractive index layer during a simultaneous multilayer coating is in a range of 5 to 100 mPa·s, more preferably 10 to 50 mPa·s when a slide bead coating scheme is used. In addition, a range of 5 to 1,200 mPa·s is preferable, and a range of 25 to 500 mPa·s is more preferable when a curtain coating scheme is used.

In addition, a preferable range of a viscosity at 15°C of a coating liquid is the same as a viscosity range at 15°C of the optical reflection film described above.

A coating and drying method is the same as an aspect in the optical reflection film described above.

An arbitrary well-known method may be used as a coating method of an adhesive. For example, a die coater method, a rotogravure roll coater method, a blade coater method, a spray coater method, an air knife coat method, a dip-coating method, a transfer method, and the like are preferable, and may be used alone or in a combination. The methods may appropriately form a solution by a solvent that may dissolve an adhesive, or perform a coating using a dispersed coating liquid. It is possible to use a well-known material as the solvent.

An adhesive layer may be formed by directly coating the infrared shielding film by the coating scheme, and an infrared shielding film may be bonded to transfer an adhesive after temporarily coating and drying a release film. In this instance, it is preferable that a drying temperature be set so that a residual solvent is decreased as possible. For this reason, even though a drying temperature and a time are not specified, it is preferable to provide a temperature of 50 to 150°C, and a drying time of 10 seconds to 5 minutes. In addition, it is preferable to perform a curing at 50°C for about

three days after the drying.

<Infrared shielding body>

An infrared shielding body according to the invention refers to an aspect in which the infrared shielding film of the invention is provided on at least one surface of a base.

It is preferable to use, as the base, a plastic base, a metal base, a ceramic base, a cloth-shaped base, and the like, and the infrared shielding film of the invention is provided on a base having various shapes such as a shape of a film, a shape of a plate, a spherical shape, a cubical shape, a shape of a cuboid, and the like. Among these, itispreferable to use a ceramic base having a shape of a plate, and it is preferable to use an infrared shielding body in which the infrared shielding film of the invention is provided on a glass plate. Preferable examples of the glass plate include a float plate glass described in JIS R 3202, and a polished plate glass. It is preferable that a thickness of the glass is 0.01 mm to 20 mm.

A method of providing the adhesive layer on the infrared shielding film, and adhering the infrared shielding film to the base through the adhesive layer as described above is preferably used as a method of providing the infrared shielding film of the invention.

A dry-type bonding that bonds a film to the base directly, and a water bonding method described above may be suitable for a bonding method. However, it is preferable to use the water-bonding method in terms of preventing air from entering between the base and the infrared shielding film, and an easiness of a construction such as a positioning of the infrared shielding film on the base.

The infrared shielding body of the invention refers to an aspect in which an infrared reflection film of the invention is provided on at least one surface of a base. However, when the film is provided on a plurality of surfaces, a state in which a plurality of bases is provided on the infrared shielding film of the invention may be adopted. For example, an aspect in which the infrared shielding film of the invention is provided on both surfaces of the plate glass described above, and an aspect having a shape of laminated glass in which an adhesive layer is provided on both surfaces of the infrared shielding film of the invention, and the plate glass described above is bonded to both surfaces of the infrared shielding film may be adopted.

[Application of optical reflection film and infrared shielding film]

The optical reflection film of the invention may be set to an optical reflection body by providing a substrate (or also referred to as a base). In this case, it is preferable that the optical reflection film is provided on at least one surface of the substrate.

The optical reflection film and the infrared shielding film of the invention may be applied to a wide range of fields. For example, the film is used as a window covering film such as a heat ray reflection film which is bonded to a window glass or facility exposed to sunlight for a long period of time such as an automotive window and an outdoor window of a building, and provides an infrared reflection effect that suppresses an excessive increase in an indoor temperature, an agricultural film for a green house, and the like to mainly provide an infrared shielding effect that suppresses an excessive increase in a temperature within a house, and enhance a weather resistance.

In addition, as automotive laminated glass, the optical reflection film of the invention and the infrared shielding film of the invention are interposed between a couple of glass, and are used as an automotive infrared shielding film, which is preferable in terms of a durability since the infrared reflection film may be sealed from external air gas.

In particular, it is suitable for a member in which the optical reflection film according to the invention is bonded to glass corresponding to a base or a glass-alternative resin base directly or through an adhesive.

When an adhesive is bonded to window glass corresponding to a base, an installation is performed so that the optical reflection film is placed on an incident surface side of sunlight (heat ray). In addition, when the near infrared reflection film is sandwiched between window glass and a substrate, the near infrared reflection film may be sealed from ambient gas such as moisture, and is preferable for a durability. It is preferable even when the optical reflection film of the invention is installed in an outdoor place or an outside of a car (for bonding on an outside) since an environmental durability is obtained.

It is possible to use, as an adhesive applicable to the invention, an adhesive containing a photo-curable or thermosetting resin as a main component.

It is preferable that an adhesive have a durability with respect to an ultraviolet ray, and an acrylic pressure sensitive adhesive or a silicone pressure sensitive adhesive are preferable. Further, the acrylic pressure sensitive adhesive is preferable in terms of a pressure sensitive adhesive property or a cost. In particular, a solvent system is preferable between a solvent system and an emulsion system in the acrylic pressure sensitive adhesive since a peeling strength is easily controlled. When a solution polymerization polymer is used as the acrylic pressure sensitive adhesive, a well-known monomer may be used as a monomer thereof.

In addition, a polyvinyl butyral-based resin or an ethylene-vinyl acetate copolymer resin used as an intermediate layer of laminated glass may be used. Specifically, examples include plastic polyvinyl butyral (manufactured by Sekisui Chemical Corporation, manufactured by Mitsubishi Monsanto Corporation, and the like), an ethylene-vinyl acetate copolymer (manufactured by DuPont Corporation, manufactured by Takeda Pharmaceutical Company Limited, and Deca-Durabolin), a modified ethylene-vinyl acetate copolymer (manufactured by Tosoh Corporation, Melsen G), and the like. An ultraviolet absorber, an antioxidant, an antistatic agent, a heat stabilizer, a lubricant, a filler, a colorant, an adhesion regular, and the like may be appropriately added to and mixed with an adhesion layer. Examples

Hereinafter, the invention is specifically described using Examples. However, the invention is not limited to Examples. An expression "%" is used in Examples, and indicates "mass%" unless otherwise specified.

Evaluation item and evaluation criteria

<<Crack in coating film after coating and drying>>

After a coating and drying, a state of a coating film after a humidification for 24 hours in a room having a relative humidity of 20% at 23°C was evaluated based on criteria below.

Evaluation criteria of cracks in coating film

1. A great number of great cracks are visually observed in a coating film.
2. Several great cracks are visually observed in a coating film.
3. Several slight cracks are visually observed in a coating film.
4. A crack in a coating film is not visually observed. However, a plurality of cracks is observed when seen through a 100 times magnifying glass.
5. A crack in a coating film is not visually observed. However, several cracks are observed through a 100 times magnifying glass.
6. A crack is not observed visually and through a 100 times magnifying glass.

<<Crack in heat cycle test>>

After a coated film was humidified for one day at 23°C and a relative humidity of 55%, a cycle of 2 hours in a constant temperature reservoir at 85°C, and 2 hours at 23°C and a relative humidity of 55% was repeated three times. Then, cracking of a coating film within a range of 2.5 cm × 2.5 cm was verified visually and through a 100 times magnifying glass, and the cracking of a coating film was evaluated based on the same evaluation criteria as that after a coating and drying.

<<Influence of moisture absorption and desorption>>

To evaluate cracking due to moisture absorption and desorption of a coating film, cracking after repeating a humidification of an obtained film for 24 hours in an atmosphere of 25°C and a relative humidity of 80%, and a humidification of the obtained film for 24 hours in an atmosphere of 25°C and a relative humidity of 20% three times was evaluated based on the same evaluation criteria.

"Example 1"

In 100 ml beaker, ethanol 20 ml and tamarind seed gum (trade name TG500, manufactured by MRC polysaccharide Co., Ltd, average chain of glucose main chain about 1, 570 (600, 000 ÷ 1,530 × 4)) formed of 1,4-bonds of glucose (hereinafter, Glu) as a main chain, having xylose, xylose (Xyl) and galactose (Ga) as a side chain at 6 position of glucose, having a structure as below, and

[Chemical formula 1]

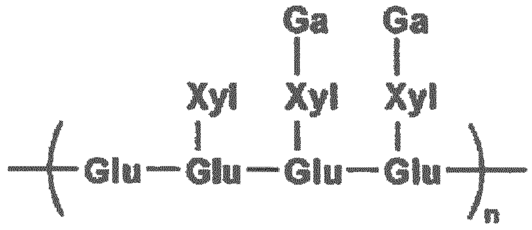

unit molecular weight :1530

having an average molecular weight obtained from a limiting viscosity of 600, 000 were put in a 100 ml beaker, and were sufficiently stirred and dispersed. Addition thereof was performed while stirring 900 ml of pure water in a 1L beaker with a stirring rod. Further, the inside of the 100 ml beaker was sufficiently rinsed using 20 ml of ethanol , and the mixture containing all the rinsed substance was put into the 1L beaker and the whole mixture was stirred for a night, and then an internal temperature was heated at 90°C for 2 hours to completely dissolve tamarind seed gum. The temperature was returned to room temperature, and 1,4-α-D-glucanglucano hydrase was caused to act. An average molecular weight obtained from a limiting viscosity was set to about 15, 000 (average chain length of a main chain is 10). The liquid was heated again at 80°C for 1 hour to deactivate the enzyme, the temperature was returned to room temperature, and then the total volume of the solution was adjusted to 1L, whereby a 2% solution (hereinafter, XG-1) of a compound in which a main sugar chain by a 1,4 bond had 100 or less average chains, a branch structure by a 1, 6 bond was present, and the branched sugar chain had 2.7 average chains was obtained.

In the same manner, XG-2 having a main chain of 50 chains, and XG-3 having a main chain of 90 chains were obtained.

In 100 ml beaker, ethanol 20 ml and locust bean gum (trade name A200, manufactured by MRC polysaccharide Co., Ltd, average chain of mannose main chain about 1,770) formed of 1, 4-bonds of mannose (Man) as a main chain, having galactose (hereinafter, Ga) as a side chain at 6 position of Man, having a structure as below, and

[Chemical formula 2]

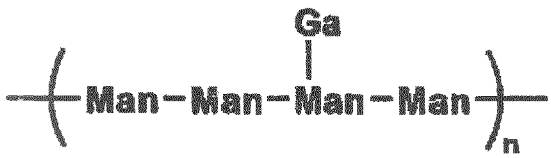

unit molecular weight :900

having an average molecular weight obtained from a limiting viscosity of 400, 000 were put in a 100 ml beaker, and RB-1 having an average chain length of a main chain of 5, and having an average chain length of a side chain of 1 was obtained in the same manner as the above description.

In addition, compounds CD-1 and CD-2 corresponding to a saccharide in which a main sugar chain by a 1,4 bond has 100 or less average chains, a branch structure by a 1, 6 bond is present, a branched sugar chain has 1 to 20 average chains, and the main chain has a cyclic structure were prepared.

That is, each of a compound (CD-1: main chain is cyclic, an average chain length of a main chain is 40, and an average chain length of a side chain is 20) of Example 1, and a peak 1 compound (CD-2: main chain is cyclic, an average chain length of a main chain is 20, and an average chain length of a side chain is 7) of Example 5 was obtained based on Example of Japanese Unexamined Publication No. 8-134104.

(Preparation of a coating liquid for a low refractive index layer L1)

To 17.6 parts by mass of pure water, 26. 2 parts by mass of a 1.0 mass% aqueous solution of tamarind seed gum (trade name TG500, manufactured by MRC polysaccharide Co., Ltd) and 3.4 parts by mass of a 5.0 mass% aqueous solution of a polyvinyl alcohol were added and mixed with each other. A liquid in which 64.5 parts by mass of a 20 mass% fluorine-containing polymer (Asahi guard E82: manufactured by Asahi Glass company) solution, 10.0 parts by mass of a 5.5 mass% aqueous solution of boric acid, and 0. 5 parts by mass of a 2.1 mass% aqueous solution of lithium hydroxide were dissolved in 21.6 parts by mass of pure water was added thereto and mixed with each other. Finally, the total

amount of the resultant was adjusted to 150 parts by mass with pure water, thereby preparing a coating liquid for a low refractive index layer L1.

On a blue plate glass, the coating liquid for a low refractive index layer L1 was coated using a spin coater so as to have a thickness of 0.5μm, and dried on a hot plate at 80°C for 5 minutes. The refractive index of the coating film was measured by a non-contact thin film measuring apparatus (F20 manufactured by Filmetrics, Inc., interference reflection film thickness measuring apparatus), thereby confirming a refractive index of 1.38.

(Preparation of coating liquid for high refractive index layer H1)

To 50 g of an aqueous solution of 5.0 mass% acid-treated gelatin, 5 g of 2 mass% XG-1 was gradually added while stirring and mixed with each other. Subsequently, 0.043 g of 5.0 mass% 2-DB-500E (manufactured by NOF Corporation) was added as a surfactant, and pure water was added such that the total volume of the solution became 100 ml, whereby a coating liquid H1 (for a high refractive index layer) was prepared

The refractive index thereof was measured in the same manner as the coating liquid for a low refractive index layer L1, and it was confirmed that the refractive index thereof was 1.56.

In the same manner, a coating liquid for a high refractive index layer H2 was prepared using XG-2 instead of XG-1, a coating liquid for a high refractive index layer H3 was prepared using RB-1 instead of XG-1, and coating liquids for a high refractive index layer H4 to H10 were prepared using the materials described in Table 1 instead of XG-1.

The refractive indexes thereof were measured in the same manner as L1, and it was confirmed that each of the refractive indexes of H2 to H10 was 1.56.

<<Preparation of infrared shielding film samples 1 to 10»

An easy adhesion-treated PET film was cut into a size of 8 cm × 8 cm, this cut film was pasted on a glass substrate cut into a size of 8 cm × 8 cm with a double-sided adhesive tape. On this film, the coating liquid for a low refractive index layer L1 was dropped and coated using a spin coater with an adjusted revolution so as to have a thickness of 200 nm after drying. The resultant together with the glass substrate was dried on a hot plate at 80°C, and then installed on the spin coater again in order to drop and coat the coating liquid for a high refractive index layer H1 thereon so as to have a thickness of 170 nm after drying. The resultant was peeled off from the surface of the glass substrate and dried on a hot plate at 80°C. This operation was repeated 14 times, and the spectrum of the resultant was measured by a spectrophotometer U-4000 manufactured by Hitachi High-Technologies Corporation. Asa result, it was confirmed that the resultant was an infrared shielding film having a reflectance of about 60% at 1100 nm that corresponds to the near infrared region.

Infrared shielding film samples 2 to 10 were prepared by laminating a low refractive index layer and a high refractive index layer on a PET film in the same configuration as above using the coating liquids H2 to H10 instead of the coating liquid H1 for a high refractive index layer using.

It was confirmed that the samples 2 to 10 have the same reflectance properties as the sample 1.

Regarding the samples thus prepared, the above described evaluations of cracking of a coating film after coating and drying, cracking in heat cycle test, and influence of moisture absorption and desorption were performed. The results are shown in Table 1.

[Table 1]

| Sample | Low refractive index layer | High refractive index layer | Constitutional condition | | | Evaluation result | | | Remarks |
|---|---|---|---|---|---|---|---|---|---|
| | | | Sugar chain | | | Evaluation of cracking of coating film | | | |
| | | | Name of saccharide | Main chains 100 or less | Branches 1 to 20 | After coating and drying | Heat cycle test | Moisture absorption and desorption | |
| 1 | L1 | H1 | XG-1 | 10 | 3 | 5 | 3 | 3 | The invention |
| 2 | L1 | H2 | XG-2 | 50 | 3 | 5 | 5 | 3 | The invention |
| 3 | L1 | H3 | RB-1 | 5 | 1 | 5 | 4 | 3 | The invention |
| 4 | L1 | H4 | CD-1 | 40 | 20 | 5 | 3 | 2 | The invention |
| 5 | L1 | H5 | CD-2 | 20 | 7 | 6 | 4 | 5 | The invention |
| 6 | L1 | H6 | Maltose | 1 | 0 | 3 | 2 | 1 | Comparison |
| 7 | L1 | H7 | Glucose | 1 | 0 | 3 | 2 | 1 | Comparison |
| 8 | L1 | H8 | Guar gum | 800 | 2 | 5 | 2 | 3 | Comparison |
| 9 | L1 | H9 | Amylose | 15 | 0 | 5 | 2 | 3 | Comparison |
| 10 | L1 | H10 | None | - | - | 3 | 2 | 1 | Comparison |

From the results shown in Table 1, it was found that the samples of the invention is strong with respect to cracking. On the other hand, in the case of using guar gum that is a saccharide having side chains and a large number of main chains, amylose that is a saccharide not having a side chain, and maltose and glucose that are a monosaccharide, cracking of a coating film was significant and the extent of cracking was particularly severe when a moisture absorption and desorption was repeated.

Guar gum; a polysaccharide in which one molecule of galactose as a side chain is bound to two molecules of mannose linked in a linear chain. The molecular weight thereof is 200,000 to 300,000.

Amylose; Mw 2800, polymerization degree of the main chain is about 15, the one manufactured by Tokyo Chemical Industry Co., Ltd. was used.

"Example 2"

(Preparation of coating liquid for a low refractive index layer L2)

To 22 g of a 15.0% silica sol (silicon dioxide particles having a volume average particle diameter of 15 nm (trade name: PL-1 manufactured by FUSO CHEMICAL CO., LTD.)), 50 g of an aqueous solution of 5.0 mass% acid-treated gelatin (AP-270 manufactured by Nippi., Inc.) was gradually added while stirring, and mixed with each other. Subsequently, 0.043 g of 5.0 mass% 2-DB-500E (manufactured by NOF Corporation) was added as a surfactant, and pure water was added such that the total volume of the solution became 100 ml, whereby a coating liquid for a low refractive index layer L2 was prepared.

On a blue plate glass, the coating liquid for a low refractive index layer L2 was coated using a spin coater so as to have a thickness of 0.5 μm, and dried on a hot plate at 80°C for 5 minutes. The refractive index of the coating film was measured by a non-contact thin film measuring apparatus (F20 manufactured by Filmetrics, Inc., interference reflection film thickness measuring apparatus), thereby confirming a refractive index of 1.368.

(Preparation of coating liquid for high and low refractive index layer H11)

To 45 g of a 15.0% titanium dioxide sol (rutile type titanium dioxide particles having a volume average particle diameter of 5 nm (trade name: SRD-W manufactured by SAKAI CHEMICAL INDUSTRY CO., LTD.)), 50 g of an aqueous solution of 5.0 mass% acid-treated gelatin containing 5 g of 2 mass% XG-1 was gradually added while stirring, and mixed with each other. Subsequently, 0.043 g of 5.0 mass% 2-DB-500E (manufactured by NOF Corporation) was added as a surfactant, and pure water was added such that the total volume of the solution became 100 ml, whereby a coating liquid for a high and low refractive index layer H11 was prepared.

The refractive index thereof was measured in the same manner as the coating liquid for a low refractive index layer L1, and it was confirmed that the refractive index thereof was 1.96.

Coating liquids for a high refractive index layer H12 to H15 and H16, and coating liquids for a high refraction H20 to H23 of comparison were prepared except using the materials described in Table 2 instead of XG-1. The refractive indexes thereof were measured in the same manner as L1, and it was confirmed that each of the refractive indexes was 1.96.

(Preparation of coating liquid for high refractive index layer H17)

A titanium dioxide sol was prepared in the presence of a saccharide as follows.

To 600 g of the aqueous solution of 1 mass% XG-1 in a 1 L glass beaker, 240 g of an aqueous titanium oxychloride solution having a $TiO_2$ concentration of 25% (60 g in terms of $TiO_2$) and 5 g of zirconium oxychloride powder having a $ZrO_2$ concentration of 35% (1.8 g in terms of $ZnO_2$) were added, and the total amount thereof was adjusted to 1 L with water, thereby confirming dissolution.

Into a 2 L flask equipped with a stirring means and a reflux condenser, 1 kg of water, 20 g of an aqueous stannic chloride solution having a $SnO_2$ concentration of 30% (6 g in terms of $Sn0O_2$), and 16 g of 36% hydrochloric acid were charged, and heated to 60°C while stirring. One L of the aqueous solution (1) above was dropped thereto over 15 minutes while maintaining the temperature at 60°C. The resultant was heated to the boiling temperature after completion of dropping, and heated and refluxed for 3 hours in a boiling state. The resultant was cooled down to 40°C after stopping heating, the pH thereof was adjusted to 5.0 with an ammonium solution, decantation was repeated 3 times. After boiling for 1 hour at 100°C, the resultant was cooled down to room temperature and diluted with pure water so as to adjust the concentration of $TiO_2$ to 15%, thereby obtaining 300 g of a titanium dioxide sol (solution A).

Titania sol thus obtained was dried and subjected to an X-ray diffraction method to confirm the crystal system thereof. The analysis result exhibited that the titania sol was a rutile type. From the surface analysis of the titania sol, the presence of the polysaccharide of the raw material was confirmed.

To this, 50 g of an aqueous solution of 5 mass% acid-treated gelatin was gradually added while stirring and mixed with each other. Subsequently, 0.043 g of 5.0 mass% 2-DB-500E (manufactured by NOF Corporation) was added as a surfactant, and pure water was added such that the total volume of the solution became 100 ml, whereby a coating liquid for a high and low refraction H17 was prepared.

The refractive index thereof was measured in the same manner as the coating liquid for a low refractive index layer L1, and it was confirmed that the refractive index thereof was 1.96.

In the same manner as the coating liquid for a high and low refraction H17, coating liquids for a high refractive index layer H18 and H19 were prepared using the materials described in Table instead of XG-1. For these coating liquids also, the refractive indexes were measured in the same manner as L1 and it was confirmed that each of the refractive indexes was 1.96.

<<Preparation of infrared shielding film samples 11 to 23>>

An easy adhesion-treated PET film was cut into a size of 8 cm x 8 cm, this cut film was pasted on a glass substrate cut into a size of 8 cm x 8 cm with a double-sided adhesive tape. On this film, the coating liquid for a low refractive index layer L2 was dropped and coated using a spin coater with an adjusted revolution so as to have a thickness of 200 nm after drying. The resultant together with the glass substrate was dried on a hot plate at 80°C, and then installed on the spin coater again in order to drop and coat the coating liquid for a high refractive index layer H11 thereon to have a thickness of 170 nm after drying. The resultant was peeled off from the surface of the glass substrate and dried on a hot plate at 80°C. This operation was repeated 14 times, thereby preparing an infrared shielding film sample 11. The spectrum thereof was measured by a spectrophotometer U-4000 manufactured by Hitachi High-Technologies Corporation. As a result, it was confirmed that the infrared shielding film sample 11 was an infrared shielding film having a reflectance of almost 100% over 980 nm to 1240 nm that corresponds to the near infrared region.

Infrared shielding film samples 12 to 23 were prepared by laminating a low refractive index layer and a high refractive index layer on a PET film in the same configuration as above using the coating liquids described in Table 2 instead of the coating liquid for a high refractive index layer H1.

For each of the samples thus prepared, the same extent of reflectance as the infrared shielding film sample 11 was observed in the near infrared region, whereby it was confirmed that the samples thus prepared were an infrared shielding film.

Regarding the samples thus prepared, the above described evaluations of cracking of a coating film after coating and drying, cracking in heat cycle test, and influence of moisture absorption and desorption were performed in the same manner.

The results are shown in Table 2.

[Table 2]

| Sample | Low refractive index layer | High refractive index layer | Constitutional condition | | | | | | Evaluation result | | | Remarks |
|---|---|---|---|---|---|---|---|---|---|---|---|---|
| | | | Sugar chain Metal oxide | | | | | | Evaluation of cracking of coating film | | | |
| | | | Name of saccharide | Main chains 100 or less | Branches 1 to 20 | Cyclic structure | Presence or absence | Produced together with polysaccharide | After coating and drying | Heat cycle test | Moisture absorption and desorption | |
| 11 | L2 | H11 | XG-1 | 10 | 3 | Absence | Presence | No | 5 | 4 | 5 | The invention |
| 12 | L2 | H12 | XG-2 | 50 | 3 | Absence | Presence | No | 5 | 3 | 3 | The invention |
| 13 | L2 | H13 | XG-3 | 90 | 3 | Absence | Presence | No | 5 | 3 | 4 | The invention |
| 14 | L2 | H14 | RG-1 | 5 | 1 | Absence | Presence | No | 5 | 5 | 4 | The invention |
| 15 | L2 | H15 | CD-2 | 20 | 7 | Presence | Presence | No | 6 | 5 | 4 | The invention |
| 16 | L2 | H17 | XG-1 | 10 | 3 | Absence | Presence | Yes | 6 | 5 | 5 | The invention |
| 17 | L2 | H18 | XG-2 | 50 | 3 | Absence | Presence | Yes | 6 | 5 | 6 | The invention |
| 18 | L2 | H19 | CD-2 | 20 | 7 | Presence | Presence | Yes | 6 | 6 | 6 | The invention |
| 19 | L2 | H16 | None | - | - | Absence | Presence | No | 2 | 1 | 1 | Comparison |
| 20 | L2 | H20 | Maltose | 1 | 0 | Absence | Presence | No | 3 | 1 | 1 | Comparison |
| 21 | L2 | H21 | Glucose | 1 | 0 | Absence | Presence | No | 3 | 1 | 1 | Comparison |
| 22 | L2 | H22 | Guar gum | 800 | 2 | Absence | Presence | No | 5 | 2 | 2 | Comparison |
| 23 | L2 | H23 | Amylose | 15 | 0 | Absence | Presence | No | 5 | 2 | 2 | Comparison |

From the results shown in Table 2, it was found that a small number of cracks were generated in the coating film of the samples according to the invention. The cracking property is particularly favorable in a case where titanium dioxide particles are produced in the presence of a saccharide of the invention.

"Example 3"

(Preparation of coating liquid for high refractive index layer 1)

Sixty parts by mass of a zirconia sol (Nanoyusu ZR30-AR manufactured by Nissan Chemical Industries Ltd.) was heated to 50°C while stirring, 100 parts by mass of a 5 mass% aqueous solution of ethylated guar gum having a substitution rate of 20% and 150 parts by mass of pure water were added thereto and stirred for 90 minutes, and then 0.45 parts by mass of a 5 mass% aqueous solution of a surfactant (Quartamin 24P manufactured by Kao Corporation) was added to the resultant, thereby preparing a coating liquid for a high refractive index layer 1.

(Preparation of coating liquid for high refractive index layer 2)

A coating liquid for a high refractive index layer 2 was prepared in the same manner as the coating liquid for a high refractive index layer 1 except using a 5 mass% aqueous solution of methyl cellulose ((Metolose SM25 manufactured by Shin-Etsu Chemical Co. , Ltd.) instead of an aqueous solution of ethylated guar gum.

(Preparation of coating liquid for high refractive index layer 3)

A coating liquid for a high refractive index layer 3 was prepared in the same manner as the coating liquid for a high refractive index layer 1 except using a 5 mass% aqueous solution of hydroxypropyl methyl cellulose (Metolose 60SH 15 manufactured by Shin-Etsu Chemical Co., Ltd.) instead of an aqueous solution of ethylated guar gum.

(Preparation of coating liquid for high refractive index layer 4)

A coating liquid for a high refractive index layer 4 was prepared in the same manner as the coating liquid for a high refractive index layer 1 except for using a 20 mass% titanium dioxide sol (a rutile type titanium dioxide having a volume average particle diameter of 35 nm) instead of a zirconia sol.

(Preparation of coating liquid for high refractive index layer 5)

A coating liquid for a high refractive index layer 5 was prepared in the same manner as the coating liquid for a high refractive index layer 4 except for using a 5 mass% aqueous solution of methyl cellulose (Metolose SM25 manufactured by Shin-Etsu Chemical Co., Ltd.) instead of an aqueous solution of ethylated guar gum.

(Preparation of coating liquid for high refractive index layer 6)

A coating liquid for a high refractive index layer 6 was prepared in the same manner as the coating liquid for a high refractive index layer 4 except for using a 5 mass% aqueous solution of hydroxypropyl methyl cellulose (Metolose 60SH 15 manufactured by Shin-Etsu Chemical Co., Ltd.) instead of an aqueous solution of ethylated guar gum.

(Preparation of coating liquid for high refractive index layer 7)

A coating liquid for a high refractive index layer 7 was prepared in the same manner as the coating liquid for a high refractive index layer 4 except for using a 5 mass% aqueous solution of hydroxypropyl methyl cellulose (Metolose 60SH 50 manufactured by Shin-Etsu Chemical Co., Ltd.) instead of an aqueous solution of ethylated guar gum.

(Preparation of coating liquid for high refractive index layer 8)

A coating liquid for a high refractive index layer 8 was prepared in the same manner as the coating liquid for a high refractive index layer 4 except for using a 5 mass% aqueous solution of hydroxypropyl methyl cellulose (Metolose 60SH 100 manufactured by Shin-Etsu Chemical Co., Ltd.) instead of an aqueous solution of ethylated guar gum.

(Preparation of coating liquid for high refractive index layer 9 (Comparative example))

A dispersion of titanium dioxide was prepared having a dispersed particle diameter of 20 nm at D50 by dispersing the following composition using a ball mill for 4 hours.

Iso propanol 100 parts by mass
Pyridine 3 parts by mass
Ethyl silicate (manufactured by COLCOAT CO., Ltd., including 30 mass% of active constituents) 5 parts by mass
Rutile type titanium dioxide particles (having a volume average particle diameter of 15 nm) 10 parts by mass To the dispersion thus obtained, 1.5 parts by mass of a ultraviolet curable binder (X-12-2400 manufactured by Shin-Etsu Chemical Co., Ltd., including 30 mass% of active constituents) and 0.15 parts by mass of a catalyst (DX-2400 manufactured by Shin-Etsu Chemical Co., Ltd.) were blended and dispersed using a ball mill for 1 hour, thereby preparing a titanium dioxide-containing coating liquid 9 for a high refractive index layer having a dispersed particle diameter of 16 nm at D50.

(Preparation of coating liquid for high refractive index layer 10 (Comparative example))

A coating liquid for a high refractive index layer 10 was prepared in the same manner as the coating liquid for a high refractive index layer 4 except using a 5 mass% aqueous solution of guar gum instead of an aqueous solution of ethylated guar gum.

(Preparation of coating liquid for high refractive index layer 11 (Comparative example))

A coating liquid for a high refractive index layer 11 was prepared in the same manner as the coating liquid for a high refractive index layer 4 except using a 5 mass% aqueous suspension of cellulose instead of an aqueous solution of ethylated guar gum. This solution was not possible to be used as a coating liquid since a large amount of undissolved aggregates of cellulose was present in the solution.

(Preparation of coating liquid for high refractive index layer 12 (Comparative example))

A coating liquid for a high refractive index layer 12 was prepared in the same manner as the coating liquid for a high refractive index layer 4 except using a 5 mass% aqueous solution of carboxymethyl cellulose instead of an aqueous solution of ethylated guar gum. This solution was not possible to be used as a coating liquid since this solution exhibited white turbidness.

(Preparation of coating liquid for low refractive index layer 1)

Sixty eight parts by mass of a colloidal silica (SNOWTEX AK manufactured by NISSAN CHEMICAL INDUSTRIES, Ltd.) and 20 parts by mass of 3% aqueous solution of boric acid were heated to 40°C while stirring, 280 parts by mass of a 5 mass% aqueous solution of a polyvinyl alcohol (PVA 235 manufactured by KURARAY Co., LTD., having a weight average molecular weight of 150,000) and 240 parts by mass of pure water were added thereto and stirred for 10 minutes, and then 0.64 parts by mass of a 5 mass% aqueous solution of a surfactant ((Quartamin 24P manufactured by Kao Corporation) was added to the resultant, thereby preparing a coating liquid for a low refractive index layer 1.

(Preparation of coating liquid for low refractive index layer 2)

To 300 parts by mass of a 5 mass% aqueous solution of methyl cellulose (Metolose SM25 manufactured by Shin-Etsu Chemical Co., Ltd.), 150 parts by mass of pure water and 0.48 parts by mass of a 5 mass% aqueous solution of a surfactant ((Quartamin 24P manufactured by Kao Corporation) was added, thereby preparing a coating liquid for a low refractive index layer 2.

(Preparation of coating liquid for low refractive index layer 3)

To 400 parts by mass of a 5 mass% aqueous solution of hydroxypropyl methyl cellulose ((Metolose 60SH 15 manufactured by Shin-Etsu Chemical Co., Ltd), 100 parts by mass of pure water and 0.48 parts by mass of a 5 mass% aqueous solution of a surfactant (Quartamin 24P manufactured by Kao Corporation) was added, thereby preparing a coating liquid for a low refractive index layer 3.

(Preparation of coating liquid for low refractive index layer 4)

To 400 parts by mass of a 5 mass% aqueous solution of hydroxypropyl methyl cellulose (Metolose 60SH 50 manufactured by Shin-Etsu Chemical Co., Ltd), 100 parts by mass of pure water and 0.48 parts by mass of a 5 mass% aqueous solution of a surfactant (Quartamin 24P manufactured by Kao Corporation) was added, thereby preparing a coating liquid for a low refractive index layer 4.

(Preparation of coating liquid for low refractive index layer 5)

To 300 parts by mass of a 5 mass% aqueous solution of hydroxypropyl methyl cellulose (Metolose 60SH 100 manufactured by Shin-Etsu Chemical Co., Ltd), 200 parts by mass of pure water and 0. 48 parts by mass of a 5 mass% aqueous solution of a surfactant (Quartamin 24P manufactured by Kao Corporation) was added, thereby preparing a coating liquid for a low refractive index layer 5.

(Preparation of coating liquid for low refractive index layer 6)

A coating liquid for a low refractive index layer 6 was prepared in the same manner as the coating liquid for a high refractive index layer 9 except for using a silica organosol (XBA-ST manufactured by Nissan Chemical Industries Ltd., having an average primary particle diameter of 10 to 20 nm) instead of rutile type titanium dioxide particles.

(Preparation of coating sample 1)

Using a slide hopper type coating apparatus capable of 9-layer coating, a simultaneous multilayer coating having total 9 layers was performed, while maintaining the temperature of the coating liquid 1 for a low refractive index layer and the coating liquid 1 for a high refractive index layer at 45°C, on a polyethylene terephthalate film (A 4300 manufactured by TOYOBO CO., LTD.: double-sided easy adhesive layer) heated to 45°C and having a thickness of 50 μm in which the undermost layer was a low refractive index layer, a low refractive index layer and a high refractive index layer were formed alternatively, and a film thickness of each of low refractive index layers was 150 nm and a film thickness of each of high refractive index layers was 150 nm.

Immediately after coating, setting was performed by blowing cold air of 5°C. At this time, the time (setting time) that was needed until anything was not attached to the finger when the surface was touched with a finger was 5 minutes.

After completion of setting, drying was performed by blowing warm air of 80°C, whereby a multilayer coating product consisting of 9 layers was prepared.

<<Evaluation of near infrared reflective film>>

Regarding each of the near infrared reflective films prepared above, the following measurement of property values and performance evaluations were performed.

(Measurement of refractive index of each layer>>

Each of the subject layers (high refractive index layer, low refractive index layer) that would be subjected to the measurement of refractive index was coated on a substrate as a single layer, thereby preparing a sample. The refractive index of each of the high refractive index layer and a low refractive index layer were obtained according to the following method.

The rear surface of the measurement side of each sample was subjected to a surface roughening treatment and a light absorption treatment using a black spray so as to prevent reflection of light from the rear surface. Reflectance in visible light region (400 nm to 700 nm) was measured using a U-4000 type (manufactured by Hitachi High-Technologies Corporation) spectrophotometer under a condition of a 5 degree specular reflection. From the result, the refractive index was obtained.

Meanwhile, since aggregation in the high refractive index layer of sample 12 was severe and white turbidness of the coating film of sample 13 was significant, the quality of the film surface of samples 12 and 13 was not acceptable for evaluations. Therefore, the measurement of the refractive index for samples 12 and 13 was not possible, and the refractive index thereof was expressed as ND in Table 1.

(Measurement of visible light transmittance and near infrared transmittance)

The transmittance of each of the near infrared reflective films in a reign of 300 nm to 2000 nm was measured

using a spectrophotometer (U-4000 type manufactured by Hitachi High-Technologies Corporation, using an integrating sphere). The transmittance value at 550 nm was used as the visible light transmittance and the transmittance value at 1200 nm was used as the near infrared transmittance.

In addition, the evaluations of cracking of a coating film after coating and drying and cracking in heat cycle test were performed according to the criteria described above.

The evaluation results are shown in Table 3 below, and it was found that any of the Examples within the invention has superior performances compared to the Comparative examples out of the invention.

[Table 3]

| Sample | High refractive index layer | | | | Low refractive index layer | | | | Spectral characteristics | | Evaluation of cracking of coating film | | Remarks |
|---|---|---|---|---|---|---|---|---|---|---|---|---|---|
| | Coating liquid No. | *1 | Water soluble polymer 1 | Viscosity of coating liquid mPa·s | Coating liquid No. | *1 | Water soluble polymer 1 | Viscosity of coating liquid mPa·s | Near infrared transmittance (%) | Visible light transmittance (%) | After coating | *2 | |
| 1 | 1 | $ZrO_2$ | Ethylated guar gum | 15 | 1 | $SiO_2$ | PVA235 | 30 | 23 | 80 | 5 | 4 | The invention |
| 2 | 2 | $ZrO_2$ | SM25 | 25 | 1 | $SiO_2$ | PVA235 | 30 | 20 | 82 | 5 | 5 | The invention |
| 3 | 3 | $ZrO_2$ | 60SH15 | 40 | 1 | $SiO_2$ | PVA235 | 30 | 18 | 82 | 5 | 5 | The invention |
| 4 | 4 | $TiO_2$ | Ethylated guar gum | 35 | 1 | $SiO_2$ | PVA235 | 30 | 15 | 84 | 5 | 4 | The invention |
| 5 | 5 | $TiO_2$ | SM25 | 60 | 1 | $SiO_2$ | PVA235 | 30 | 14 | 87 | 5 | 5 | The invention |
| 6 | 5 | $TiO_2$ | SM25 | 60 | 2 | - | SM25 | 60 | 10 | 91 | 6 | 6 | The invention |
| 7 | 6 | $TiO_2$ | 60SH15 | 40 | 3 | - | 60SH15 | 30 | 13 | 90 | 6 | 5 | The invention |
| 8 | 7 | $TiO_2$ | 60SH50 | 250 | 4 | - | 60SH50 | 300 | 10 | 92 | 6 | 6 | The invention |
| 9 | 8 | $TiO_2$ | 60SH100 | 550 | 5 | - | 60SH100 | 600 | 12 | 88 | 6 | 5 | The invention |
| 10 | 9 | $TiO_2$ | X-12-2400 | 15 | 6 | $SiO_2$ | X-12-2400 | 15 | 30 | 20 | 2 | 1 | Comparative example |
| 11 | 10 | $TiO_2$ | Guar gum | 30 | 1 | $SiO_2$ | PVA235 | 30 | 34 | 29 | 3 | 2 | Comparative example |

60SH 15: hydroxypropyl methyl cellulose
60SH 50: hydroxypropyl methyl cellulose
60SH 100: hydroxypropyl methyl cellulose
SM25: methyl cellulose
X-12-2400: UV curable resin
*1: Metal oxide particles
*2: Heat cylcle test

"Example 4"

[Preparation of optical reflection bodies 1 to 11]

Optical reflection bodies 1 to 11 were prepared using the optical reflection films (infrared reflective films) of samples 1 to 11 prepared in Example 3. On transparent acrylic resin plates of 20 cm x 20 cm having a thickness of 5 mm, each of the optical reflection films of samples 1 to 11 were adhered with an acrylic adhesive, thereby preparing optical reflection bodies 1 to 11.

[Evaluation]

It was found that the optical reflection bodies 1 to 9 of the invention prepared above are easily usable in spite of a large size, and by using the optical reflection film of the invention, excellent near infrared reflectivity of the optical reflection body of the invention was confirmed.

## Claims

1. An optical reflection film comprising, on a substrate, at least one unit in which a high refractive index layer and a low refractive layer are laminated,
wherein the high refractive index layer comprises metal oxide particles, and
at least one of a polysaccharide alkyl ether compound, a saccharide (A) in which a main sugar chain by a 1,4 bond has 100 or less average chains, a branch structure by a 1, 6 bond is present, and the branched sugar chain has 1 to 20 average chains, and a compound (A) having a saccharide structure in which a main sugar chain by a 1,4 bond has 100 or less average chains, a branch structure by a 1, 6 bond is present, and the branched sugar chain has 1 to 20 average chains.

2. The optical reflection film according to claim 1,
wherein the high refractive index layer comprises at least one of the saccharide (A) and the compound (A).

3. The optical reflection film according to claim 1 or 2,
wherein the saccharide (A) and the saccharide structure are cyclic.

4. The optical reflection filmaccording to any one of claims 1 to 3,
wherein the high refractive index layer comprises the polysaccharide alkyl ether compound.

5. The optical reflection film according to claim 1 or 4,
wherein the polysaccharide alkyl ether compound is a cellulose alkyl ether compound.

6. The optical reflection film according to any one of claims 1 to 5,
wherein the metal oxide particles are rutile type titanium dioxide particles.

7. A method of manufacturing the optical reflection film according to any one of claims 1 to 6,
wherein a high refractive index layer and a low refractive index layer are formed by an aqueous simultaneous multilayer coating.

8. The method of manufacturing the optical reflection film according to claim 7,
wherein a viscosity of a coating liquid forming each layer is 50 to 500 mPa·s at 40°C.

9. An optical reflection body in which at least one base of a substrate is provided with the optical reflection film according to any one of claims 1 to 6.

10. An infrared shielding film comprising, on a substrate, at least one unit in which a high refractive index layer and a low refractive index layer are laminated,
wherein the infrared shielding film comprises, in at least one of the high refractive index layer and the low refractive index layer, at least one of a saccharide (A) in which a main sugar chain by a 1,4 bond has 100 or less average chains, a branch structure by a 1, 6 bond is present, and the branched sugar chain has 1 to 20 average chains, and a compound (A) having a saccharide structure in which a main sugar chain by a 1,4 bond has 100 or less average

chains, a branch structure by a 1, 6 bond is present, and the branched sugar chain has 1 to 20 average chains.

**11.** The infrared shielding film according to claim 10,
wherein the high refractive index layer or the low refractive index layer comprises a metal oxide.

**12.** The infrared shielding film according to claim 10 or 11,
wherein the saccharide (A) and the saccharide structure are cyclic.

**13.** The infrared shielding film according to claim 11,
wherein particles of the metal oxide are manufactured in a presence of at least one of the saccharide (A) and the compound (A).

**14.** An infrared shielding body provided with the infrared shielding film according to any one of claims 10 to 13.

**INTERNATIONAL SEARCH REPORT**

International application No.
PCT/JP2012/066036

A. CLASSIFICATION OF SUBJECT MATTER
*G02B5/26*(2006.01)i, *G02B5/28*(2006.01)i

According to International Patent Classification (IPC) or to both national classification and IPC

B. FIELDS SEARCHED

Minimum documentation searched (classification system followed by classification symbols)
G02B5/26, G02B5/28

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2009-086659 A (Mitsubishi Chemical Corp.), 23 April 2009 (23.04.2009), paragraphs [0030], [0032], [0063], [0068], [0102]; fig. 3 to 6, 10, 13 (Family: none) | 1,4-6,9<br>7<br>2,3,8,10-14 |
| Y | JP 2004-317734 A (Fuji Photo Film Co., Ltd.), 11 November 2004 (11.11.2004), paragraphs [0073], [0074], [0081] (Family: none) | 7 |
| A | JP 2004-161792 A (Hitachi Chemical Co., Ltd.), 10 June 2004 (10.06.2004), paragraph [0043] (Family: none) | 10-14 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 August, 2012 (10.08.12) | 21 August, 2012 (21.08.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2012/066036

C (Continuation). DOCUMENTS CONSIDERED TO BE RELEVANT

| Category* | Citation of document, with indication, where appropriate, of the relevant passages | Relevant to claim No. |
|---|---|---|
| A | JP 2007-081389 A (Konica Minolta Medical & Graphic, Inc.), 29 March 2007 (29.03.2007), paragraph [0035] (Family: none) | 10-14 |
| A | JP 8-134104 A (Ezaki Glico Co., Ltd.), 28 May 1996 (28.05.1996), paragraphs [0039] to [0098] & US 6248566 B1 & EP 710674 A2 & DE 69525416 D & DE 69525416 T & DK 710674 T | 2,3,10-14 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 8110401 A
- JP 2004123766 A
- JP 2009086659 A
- JP 2004125822 A
- JP 2003266577 A
- JP 2011139199 A
- JP 2011182332 A
- JP 63017221 A
- JP 7000819 A
- JP 9165218 A
- JP 11043327 A
- WO 2007039953 A
- WO 95378007 A
- JP 8134104 A
- JP 61010483 A
- JP 1206088 A
- JP 61237681 A
- JP 63307979 A
- JP 7285265 A
- JP 7009758 A
- JP 8025795 A
- JP 57074193 A
- JP 57087988 A
- JP 62261476 A
- JP 57074192 A
- JP 57087989 A
- JP 60072785 A
- JP 61146591 A
- JP 1095091 A
- JP 3013376 A
- JP 59042993 A
- JP 59052689 A
- JP 62280069 A
- JP 61242871 A
- JP 4219266 A
- US 2761419 A
- US 2761791 A


### Non-patent literature cited in the description


- **MANABU SEINO.** Titanium dioxide - physical property and applied technology. Gihodo Shuppan Co., Ltd, 2000, 255-258
- Food industry. Biochemistry encyclopedia. Tokyo chemistry coterie Publication, 1988, 21
- **HIZUKURI et al.** *Carbohydr. Res.,* 1981, vol. 94, 205-213
- **YAMAMOTO, T.** Handbook of amylase and related enzymes. Pergamon Press, 1988, 40-45